(19) Europäisches Patentamt
European Patent Office
Office européen des brevets

(11) **EP 4 463 498 B1**

(12) **EUROPEAN PATENT SPECIFICATION**

(45) Date of publication and mention of the grant of the patent:
**17.06.2026 Bulletin 2026/25**

(21) Application number: **23704651.1**

(22) Date of filing: **11.01.2023**

(51) International Patent Classification (IPC):
***C08G 63/183*** *(2006.01)* ***C08J 11/24*** *(2006.01)*

(52) Cooperative Patent Classification (CPC):
**C08J 11/24; C08G 63/183;** C08J 2367/02; Y02W 30/62

(86) International application number:
**PCT/US2023/060455**

(87) International publication number:
**WO 2023/137311 (20.07.2023 Gazette 2023/29)**

(54) **RECYCLED CONTENT POLYETHYLENE TEREPHTHALATE AND METHOD OF MAKING THE SAME**

POLYETHYLENTEREPHTHALAT MIT RECYCELTEM INHALT UND VERFAHREN ZUR HERSTELLUNG DAVON

POLYÉTHYLÈNE TÉRÉPHTALATE RECYCLÉ ET SON PROCÉDÉ DE FABRICATION

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority:
**12.01.2022 US 202263266705 P**
**12.01.2022 US 202263266706 P**
**12.01.2022 US 202263266708 P**
**08.12.2022 US 202263386508 P**

(43) Date of publication of application:
**20.11.2024 Bulletin 2024/47**

(73) Proprietor: **Eastman Chemical Company**
**Kingsport, TN 37660 (US)**

(72) Inventors:
- **EKART, Michael Paul**
  **Kingsport, TN 37660 (US)**
- **DEBRUIN, Bruce Roger**
  **Gray, TN 37615 (US)**

(74) Representative: **Ricker, Mathias**
**Wallinger Ricker Schlotter Tostmann**
**Patent- und Rechtsanwälte Partnerschaft mbB**
**Zweibrückenstraße 5-7**
**80331 München (DE)**

(56) References cited:
**WO-A1-2021/211506**
**DE-A1- 102020 203 563**
**US-A1- 2013 041 053**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 463 498 B1

## Description

## BACKGROUND

Waste materials, especially non-biodegradable waste materials, can negatively impact the environment when disposed of in landfills after a single use. Thus, from an environmental standpoint, it is desirable to recycle as much waste material as possible. However, there still exist streams of low value waste that are nearly impossible or are economically infeasible to recycle with conventional recycling technologies. In addition, some recycling processes produce waste streams that are themselves not economically feasible to recover or recycle, resulting in additional waste streams that must be disposed of or otherwise handled.

More particularly, some chemical recycling processes used for breaking down waste plastics into simpler products suffer many operational inefficiencies that do not allow for the efficient recycling of various waste plastics. For example, these recycling processes can require high operation costs, specifically in terms of energy consumption, that may offset any financial benefit of utilizing waste plastics as a feedstock.

Solvolysis can be used to decompose plastics such as polyethylene terephthalate (PET) into its component monomers (e.g., ethylene glycol and dimethyl terephthalate). While PET can be formed from these components, it is often not since most conventional PET facilities are configured to produce PET based on terephthalic acid (TPA). Dimethyl terephthalate (DMT)-based PET provides operating advantages during end use production of plastic components and, thus, it would be desirable to provide a more efficient, cost-effective method of producing DMT-based PET, particularly a DMT-based PET with recycled content.

US patent application US 2013/041053 A1 discloses a process for the methanolysis of scrap PET to recover r-EG and r-DMT, and to produce r-PET therefrom. WO 2021/211506 A1 discloses an integrated process for the solvolysis and general recycling of scrap PET. Document DE 10 2020 203 563 A1 discloses a process for the polymerization of glycols and diesters to prepare co-polyesters, the process using specific catalysts and avoiding other specific catalysts.

## SUMMARY

The invention is defined in the appended claims.

In one aspect, the present technology concerns a process for producing a recycled content polyethylene terephthalate (r-PET) from mixed plastic waste, the process comprising: (a) processing mixed plastic waste in a plastic processing facility to provide a predominantly polyethylene terephthalate (PET) waste plastic stream; (b) subjecting the predominantly PET waste plastic stream to methanolysis in a methanolysis facility to form recycled content ethylene glycol (r-EG) and recycled content dimethyl terephthalate (r-DMT); and (c) reacting at least a portion of the r-EG and/or r-DMT in a reaction zone of a PET production facility to form recycled content polyethylene terephthalate (r-PET), wherein the plastic processing facility, the methanolysis facility, and the PET production facility are co-located.

In one aspect, the present technology concerns a process for producing recycled content polyethylene terephthalate (r-PET), the process comprising: (a) depolymerizing a predominantly polyethylene terephthalate (PET) containing waste plastic in a methanolysis reactor to form one or more methanolysis streams that comprise methanol, recycled content ethylene glycol (r-EG), and/or recycled content dimethyl terephthalate (r-DMT); (b) separating at least a portion of at least one of r-EG, methanol, and r-DMT from at least a portion of the one or more methanolysis streams in one or more distillation columns; (c) reacting r-EG and r-DMT in a reaction zone of a PET production facility to form a recycled content PET polymer melt (r-PET polymer melt) having an inherent viscosity (IV) of at least 0.50 dL/g; (d) withdrawing a predominantly vapor-phase stream comprising EG, DMT, and/or methanol from the reaction zone of the PET production facility; and (e) separating at least a portion of the vapor-phase stream withdrawn from the PET production facility in at least one of the distillation columns with the one or more methanolysis streams.

In one aspect, the present technology concerns a process for producing recycled content polyethylene terephthalate (r-PET), the process comprising: (a) reacting ethylene glycol (EG) and dimethyl terephthalate (DMT) in a reaction zone of a PET production facility, wherein the EG comprises recycled content ethylene glycol (r-EG) and/or the DMT comprises recycled content dimethyl terephthalate (r-DMT); (b) withdrawing a vapor-phase stream from the reaction zone of the PET production facility; (c) contacting the vapor-phase stream with water to remove at least a portion of the EG and/or water azeotrope-forming compounds present in the vapor-phase stream; and (d) introducing at least a portion of the azeotrope-forming compounds removed from the vapor-phase stream into a distillation column in a methanolysis facility.

In one aspect, the present technology concerns a process for producing a recycled content polyethylene terephthalate (r-PET), the process comprising: (a) depolymerizing waste plastic comprising predominantly polyethylene terephthalate (PET) in a methanolysis reactor of a methanolysis facility to form at least recycled content ethylene glycol (r-EG) and recycled content dimethyl terephthalate (r-DMT); (b) reacting r-EG and/or r-DMT in a reaction zone of a PET production facility to form a recycled content PET polymer melt (r-PET polymer melt) having an inherent viscosity (IV) of at least 0.65 dL/g; (c) pelletizing at least a portion of the r-PET polymer melt to form r-PET particles; and (d) crystallizing at

least a portion of the r-PET particles to form crystalline r-PET particles.

In one aspect, the present technology concerns a process for producing recycled content polyethylene terephthalate (r-PET), the process comprising: (a) transesterifying recycled content ethylene glycol (r-EG) and recycled content dimethyl terephthalate (r-DMT) in a transesterification zone of a PET production facility to form recycled content PET oligomers (r-PET oligomers); (b) polycondensing at least a portion of the r-PET oligomers to provide a recycled content PET polymer melt (r-PET polymer melt) having an inherent viscosity (IV) of at least 0.65 dL/g; (c) pelletizing at least a portion of the r-PET polymer melt to form recycled content PET (r-PET) particles via underwater cutting; and (d) crystallizing the r-PET particles to form crystalline r-PET particles.

In one aspect, the present technology concerns a recycled content polyethylene terephthalate (r-PET) resin comprising: a diester component comprising at least 50 mole percent of residues of dimethyl terephthalate (DMT), based on the total moles in the diester component; a diol component comprising at least 50 mole percent of residues of ethylene glycol (EG), based on the total moles in the diol component, wherein the r-PET comprises recycled content obtained from waste plastic, and wherein the r-PET comprises not more than 0.1 mole % of residues of each of the following components: 4-methyl formyl benzoate, dimethyl 1,4-cyclohexanedicarboxylate, dimethyl phthalate, methyl isopropyl terephthalate, methyl propyl terephthalate, and methyl isobutyl terephthalate.

In one aspect, the present technology concerns a recycled content polyethylene terephthalate (r-PET) resin comprising: a diester component comprising at least 50 mole percent of residues of dimethyl terephthalate (DMT), based on the total moles in the diester component; a diol component comprising at least 50 mole percent of residues of ethylene glycol (EG), based on the total moles in the diol component, wherein the r-PET comprises recycled content obtained from waste plastic, and wherein the r-PET comprises at least 0.1 mole % of residues of each of the following compounds: diisobutyl phthalate, methyl 4-ethylbenzoate, and methyl 4-vinylbenzoate.

In one aspect, the present technology concerns a recycled content polyethylene terephthalate (r-PET) resin comprising: a diester component comprising at least 50 mole percent of residues of dimethyl terephthalate (DMT) and not more than 0.50 mole percent residues of terephthalic acid, based on the total moles in the diester component; a diol component comprising at least 50 mole percent of residues of ethylene glycol (EG), based on the total moles in the diol component, wherein the r-PET comprises recycled content obtained from waste plastic and has an inherent viscosity (IV) in the range of from 0.65 to 1.10 dL/g, and wherein the r-PET comprises a plurality of spheroidal particles having an intrinsic viscosity (It.V.) at the surface of each pellet that is less than 0.25 dL/g higher than the It.V. at the center of the particle.

In one aspect, the present technology concerns a recycled content polyethylene terephthalate (r-PET) resin comprising: a diester component comprising at least 50 mole percent of residues of dimethyl terephthalate (DMT), based on the total moles in the diester component; a diol component comprising at least 50 mole percent of residues of ethylene glycol (EG), based on the total moles in the diol component, wherein the r-PET comprises recycled content obtained from waste plastic and has an inherent viscosity (IV) of 0.65 to 0.85 dL/g, wherein the r-PET comprises a plurality of particles and the intrinsic viscosity (It.V.) at the surface of at least a portion of the particles is less than 0.25 dL/g higher than the It.V. at the center of the particles, and wherein at least one of the following (i) through (iii) is true - (i) the r-PET comprises not more than 100 ppm of cobalt (Co) and bromide (Br); (ii) the r-PET has a methyl ends concentration of at least 5% and not more than 30%, based on the total end groups; and (iii) the r-PET comprises not more than 0.1 mole % of residues of 4-carboxybenzaldehyde and 9-fluoreneone-2,6-dicarboxylic acid, based on the total moles of the polyester.

## BRIEF DESCRIPTION OF THE DRAWINGS

FIG. 1 is a block flow diagram illustrating the main steps of an integrated chemical recycling facility, particularly illustrating the main steps of a plastic processing facility, a solvolysis facility, and a polyethylene terephthalate (PET) production facility;

FIG. 2 is a block flow diagram illustrating the main steps of an integrated chemical recycling facility, particularly illustrating the main steps of a methanolysis facility and a PET production facility;

FIG. 3 is a block flow diagram illustrating the main steps of an integrated chemical recycling facility, particularly illustrating one embodiment of co-located methanolysis and PET production facilities; and

FIG. 4 is a block flow diagram illustrating the main steps of an integrated chemical recycling facility, particularly illustrating one embodiment of a methanolysis facility and a PET production facility sharing a distillation zone.

## DETAILED DESCRIPTION

We have discovered a method and system for chemically recycling waste plastic efficiently and with reduced energy consumption by integrating a plastics processing with solvolysis (methanolysis) and PET production. This permits more efficient production and chemical recycling with product formation. Additionally, this results in the production of high

inherent viscosity (IV), crystalline PET formed from the recycled content EG (r-EG) and/or recycled content dimethyl terephthalate (r-DMT) formed during solvolysis. This PET exhibits additional desirable properties both during in processing and during the end use of the PET. The resulting PET can also have up to a 100 percent recycled content.

Turning initially to FIG. 1, a process and system for use in the chemical recycling of waste plastic and, in particular, waste plastic including polyethylene terephthalate (PET), is provided. The chemical recycling facility shown in FIG. 1 generally includes a plastic processing facility or step, a solvolysis facility or step, and a PET production facility or step.

Chemical recycling facilities are not mechanical recycling facilities. As used herein, the terms "mechanical recycling" and "physical recycling" refer to a recycling process that includes a step of melting waste plastic and forming the molten plastic into a new intermediate product (e.g., pellets or sheets) and/or a new end product (e.g., bottles). Generally, mechanical recycling does not substantially change the chemical structure of the plastic being recycled. The chemical recycling facilities described herein may be configured to receive and process waste streams from and/or that are not typically processable by a mechanical recycling facility.

In some cases, at least two, or all, of the plastic processing facility, the solvolysis facility, and the PET production facility may be co-located. As used herein, the term "co-located" refers to the characteristic of at least two objects being situated on a common physical site, and/or within 8 km (5 miles), within 3.2 km (2 miles), within 1.6 km (1 mile), within 1.2 km (0.75 miles), within 804 m (0.5 miles), or within 402 m (0.25 miles) of each other, measured as a straight-line distance between two designated points. When two facilities are said to be "co-located," the distances may be measured between geographic centers of the facilities.

When two or more facilities are co-located, the facilities may be integrated in one or more ways. Examples of integration include, but are not limited to, heat integration, utility integration, waste-water integration, mass flow integration via conduits, office space, cafeterias, integration of plant management, IT department, maintenance department, and sharing of common equipment and parts, such as seals, gaskets, and the like. Specific embodiments of integration between the plastic processing facility, solvolysis facility, and **PET** production facility will be discussed in detail herein.

One or more, or all, of the plastic processing facility, the solvolysis facility, and the **PET** production facility can be commercial scale facilities. For example, in some cases, the plastic processing facility can accept a stream of mixed waste plastic feed stock at an average annual feed rate of at least 227 kg (500 pounds), at least 454 kg (1,000 pounds), at least 907 kg (2,000 pounds), at least 2,268 kg (5,000 pounds), at least 4,536 kg (10,000 pounds), at least 22.7 tons (50,000 pounds), or at least 45.4 tons (100,000 pounds) per hour, averaged over one year. In some cases, the solvolysis facility and/or PET production facility can produce one or more recycled content product streams at an average annual rate of at least 45.4 kg (100 pounds), or at least 454 kg (1,000 pounds), or at least 2,268 kg (5,000 pounds), at least 4,536 kg (10,000 pounds), at least 22.7 tones (50,000 pounds), or at least 34.0 tons (75,000 pounds) per hour, averaged over one year. When more than one r-product stream is produced, these rates can apply to the combined rate of all r-products.

One or more, or all, of the plastic processing facility, the solvolysis facility, and the PET production facility can be operated in a continuous manner. For example, each of the processes within each of the facilities and/or the process amongst the facilities may be operated continuously and may not include batch or semi-batch operation. In some cases, at least a portion of one or more of the facilities may be operated in a batch or semi-batch manner, but the operation amongst the facilities may be continuous overall.

In operation, the chemical recycling facility shown in FIG. 1 can process a stream of mixed waste plastic in a plastic processing facility to form a predominantly PET waste plastic. As used herein, the term "predominantly" means at least 50 weight percent. The predominantly PET waste plastic stream can then be sent to a solvolysis facility, wherein it can be combined with a solvent prior to being subjected to a solvolysis reaction. Examples of suitable solvents can include, but are not limited to, (i) water (in which case the solvolysis may be referred to as "hydrolysis"), (ii) alcohols (in which case the solvolysis may be referred to as "alcoholysis"), such as methanol (in which case the solvolysis may be referred to as "methanolysis") or ethanol (in which case the solvolysis may be referred to as "ethanolysis"), (iii) glycols such as ethylene glycol or diethylene glycol (in which case the solvolysis may be referred to as "glycolysis"), or (iv) ammonia (in which case the solvolysis may be referred to as "ammonolysis"). As shown in FIG. 1, the products of solvolysis include a recycled content glycol (r-glycol), a recycled content terephthalyl (r-terephthalyl), a solvent, and one or more co-products. When the solvolysis facility is a methanolysis facility, the r-glycol comprises recycled content ethylene glycol (r-EG) and the r-terephthalyl comprises recycled content dimethyl terephthalate (r-DMT).

As shown in FIG. 1, at least a portion of the r-glycol and/or r-terephthalyl can be transported to a reaction zone of a PET production facility, wherein the r-glycol and r-terephthalyl can be reacted, optionally with one or more comonomers, to form recycled content PET oligomers (r-PET). The r-PET oligomers can be reacted further in a polymerization (or polycondensation) zone (not shown in FIG. 1) to form a recycled content PET polymer melt (r-PET polymer melt). The resulting r-PET polymer melt can then be pelletized and crystallized to form a recycled content PET (r-PET). In some cases, the r-PET can have a total recycled content of at least 5, at least 10, at least 25, at least 50, at least 75, at least 90, or at least 95 percent and/or not more than 95, not more than 90, not more than 75, or not more than 50 percent.

Turning now to FIG. 2, an exemplary chemical recycling facility is shown, including a methanolysis facility. As shown in FIG. 2, a stream of mixed waste plastic can be introduced into a plastic processing facility. As used herein, the

terms "mixed plastic waste" and "MPW' refer to a mixture of at least two types of waste plastics including, but not limited to the following plastic types: polyethylene terephthalate (PET), one or more polyolefins (PO), and polyvinylchloride (PVC). In some cases, the MPW can include at least 20, at least 25, at least 30, at least 35, at least 40, at least 45, at least 50, at least 55, at least 60, at least 65, at least 70, at least 75, at least 80, at least 85, at least 90, or at least 95 weight percent PET, based on the total weight of the stream. Alternatively, or in addition, the MPW comprises not more than 99.9, not more than 99, not more than 97, not more than 92, not more than 90, not more than 85, not more than 80, not more than 75, not more than 70, not more than 65, not more than 60, not more than 55, not more than 50, not more than 45, not more than 40, not more than 35, not more than 30, not more than 25, not more than 20, not more than 15, not more than 10, or not more than 5 weight percent PET, based on the total weight of the stream.

In addition to PET, the MPW can include non-PET components, such as other plastics (e.g., polyolefins, polyvinyl chloride, and others), as well as non-plastic components such as glass, metals, dirt, sand, and cardboard. In some cases, the non-PET components can include other plastics in an amount in the range of from 2 to 35 weight percent, 5 to 30 weight percent, or 10 to 25 weight percent, based on the total weight of the stream. The amount of non-PET and non-PO plastics can be at 2, at least 5, at least 10, at least 15, at least 20, at least 30, at least 40, at least 50, or 55 weight percent and/or not more than 70, not more than 60, not more than 50, not more than 40, not more than 30, not more than 20, not more than 15, not more than 10, not more than 7, or not more than 5 weight percent, based on the total weight of mixed waste plastic.

In the plastic processing facility, the mixed waste plastic can be separated and/or sized to provide a stream of predominantly PET waste plastic. In some cases, the sizing can include increasing the size of the plastic particles (e.g., by densification or agglomeration), while, in other cases, the sizing can include decreasing the size of the particles (e.g., by grinding/granulating, shredding, chopping, or guillotining). In some cases, the size of the PET waste plastic removed from the plastics processing facility can be in the form of particles having a D90 particle size of less than 2.54 cm (1 inch), less than 1.9 cm (¾ inch), or less than 1.3 cm (½ inch) or a D90 particle size in the range of from 1.6 mm (1/16 inch) to 2.54 cm (1 inch), 3 mm (1/8 inch) to 1.9 cm (¾ inch), 6 mm (¼ inch) to 1.6 cm (5/8 inch), or 1 cm (3/8 inch) to 1.3 cm (½ inch).

In some cases, the plastic processing facility can include a separating step for removing non-PET plastic and/or non-plastic components (e.g., glass, metal, cardboard and paper, and dirt and sand) from the waste plastic. Such separation can be performed mechanically and can include utilize a fluid such as air. In some cases, the separation may include a sink-float step where different types of plastic are separated by density, usually using water or a pH-controlled liquid (e.g., caustic solution). In some cases, the separation may include use of a hydrocyclone.

As a result, the predominantly PET waste plastic can include at least 50, at least 55, at least 60, at least 65, at least 70, at least 75, at least 80, at least 85, at least 90, at least 95, at least 97, at least 99, at least 99.5, or at least 99.9 weight percent PET, based on the total weight of plastic in the predominantly PET waste plastic stream. This stream may also include polyvinyl chloride (PVC) in an amount of at least 0.05, at least 0.1, at least 0.5, at least 1, at least 2, at least 3, at least 5 and/or not more than 10, not more than 8, not more than 6, not more than 5, not more than 3 weight percent, and may include polyolefins in an amount of not more than 45, not more than 40, not more than 35, not more than 30, not more than 25, not more than 20, not more than 15, not more than 10, not more than 5, not more than 2, not more than 1, not more than 0.5 weight percent PO, based on the total weight of the predominantly PET waste plastic.

In some cases, at least a portion of the non-PET (or PO) waste plastic can itself be chemically recycled in the same or a different chemical recycling facility. Examples of chemical recycling processes to which the non-PET (or PO) waste plastic can be subjected include, but are not limited to, pyrolysis, molecular reforming, and combinations thereof.

As shown in FIG. 2, the PET waste plastic can then be introduced into a reaction zone of a methanolysis facility. In the reaction zone, the waste plastic can be contacted with a solvent (e.g., methanol) and at least partially depolymerized to form its component monomers (e.g., EG and DMT). The temperature of the methanolysis reaction can be at least 50, at least 55, at least 60, at least 65, at least 70, at least 75, at least 80, or at least 85 °C and/or not more than 350, not more than 345, not more than 340, not more than 335, not more than 330, not more than 325, not more than 320, not more than 315, not more than 310, not more than 300, or not more than 295°C. The methanol used in the methanolysis reaction is not superheated. In some cases, the solvolysis process can be a low-pressure solvolysis process and the pressure in the solvolysis reactor (or reaction zone) can be within 345 mbar (5 psi), within 689 mbar (10 psi), within .0 bar (15 psi), within 1.4 bar (20 psi), within 1.7 bar (25 psi), within 2.1 bar (30 psi), within 2.4 bar (35 psi), within 2.8 bar (40 psi), within 3.1 bar (45 psi), or within 3.4 bar (50 psi) of atmospheric, or it may be within 3.8 bar (55 psi), within 5.2 bar (75 psi), within 6.2 bar (90 psi), within 6.9 bar (100 psi), within 8.6 bar (125 psi), within 10.3 bar (150 psi), within 13.8 bar (200 psi), or within 17.2 bar (250 psi) of atmospheric.

In some cases, the average residence time of the reaction medium in the methanolysis reaction zone can be at least 1, at least 2, at least 5, at least 10, or at least 15 minutes and/or not more than 12, not more than 11, not more than 10, not more than 9, not more than 8, not more than 7, not more than 6, not more than 5, or not more than 4 hours. At least 50, at least 55, at least 60, at least 65, at least 70, at least 75, at least 80, at least 85, at least 90, at least 95, or at least 99 percent of the total weight of PET introduced into the methanolysis facility can be decomposed upon exiting the reaction zone. Further, any suitable type of reactor can be used including, but not limited to, a continuous stirred tank reactor (CSTR), a plug flow reactor, and combinations thereof.

The resulting methanolysis reactor stream withdrawn from the reaction zone can be introduced into a product separation zone, as shown in FIG. 2. In the product separation zone, one or more distillation columns can be used to separate solvent (e.g., methanol), recycled content ethylene glycol (r-EG), and recycled content dimethyl terephthalate (r-DMT) from the methanolysis co-products including, for example, streams of light organic coproducts, heavy organics coproducts, as well as bottom streams from one or more of the columns (e.g., glycol column bottoms and DMT column bottoms). These co-product streams can be further processed to remove valuable chemical compounds or may be themselves chemically recycled at the same or another chemical recycling facility. When further recycled, one or more coproduct streams may be subjected to pyrolysis and/or to molecular reforming at the same or a different chemical recycling facility.

Referring again to FIG. 2, at least a portion of the r-EG and/or r-DMT (or both the r-EG and r-DMT) withdrawn from the methanolysis facility can be introduced into a reaction zone of a PET production facility. Although shown in FIG. 2 as being introduced separately into the PET reaction zone, the r-DMT and/or r-EG can be introduced into the reaction zone as a single stream. This can occur by either combining streams of r-DMT and r-EG withdrawn from the methanolysis facility into a single stream before its introduction into the PET production facility or by withdrawing a single stream of r-DMT and r-EG from the methanolysis facility (embodiments not shown). The r-DMT and/or r-EG provided to the PET facility from the methanolysis facility can be in the liquid phase and/or the vapor phase.

As shown in FIG. 2, the r-DMT and/or r-EG from the methanolysis facility can optionally be combined with another stream of DMT and/or another stream of EG, respectively, which may or may not have recycled content. In some cases, the DMT and/or EG combined with the r-DMT and/or r-EG can be virgin, while, in other cases, it may include some recycled content from another location within the same or a different chemical recycling facility. The DMT introduced into the reaction zone can include at least 10, at least 25, at least 50, at least 75, at least 90, at least 95, at least 99, or 100 percent recycled content, and/or the EG introduced into the reaction zone can include at least 10, at least 25, at least 50, at least 75, at least 90, at least 95, at least 99, or 100 percent recycled content.

The reaction zone of the PET facility can include at least two main sections: a transesterification section and a polymerization (or polycondensation) section (not shown in FIG. 2). In the transesterification section, EG (or r-EG) and DMT (r-DMT) are reacted to form PET oligomers (r-PET oligomers) in the presence of a transesterification catalyst and optionally, one or more comonomers. As used herein, the term "oligomer" refers to a polymeric species comprising in the range of from about 7 to about 50 chain lengths. As used herein, the term "monomer" refers to a polymeric species comprising less than about three chain lengths, while the term "polymer" refers to a polymeric species comprising greater than about 50 chain lengths.

During transesterification, the catalyst present in the reaction medium can be in an amount of at least 1, at least 2, at least 4, at least 5 ppm and/or not more than 300, not more than 250, not more than 200, not more than 150, or not more than 100 ppm by weight. Examples of suitable transesterification catalysts can include, but are not limited to, titanium alkoxides, tin (II) or (IV) esters, alkali metals or alkali earth metals (e.g., Li and Ca), manganese compounds, zinc compounds, magnesium acetates or benzoates, and combinations thereof. Phosphorus-containing compounds and some colorants may also be added to the transesterification zone.

In some cases, one or more comonomers may also be added to the reaction zone of the PET facility and may react with the DMT and EG to form a PET copolymer. As used herein, the term "PET copolymer" refers to a PET with at least 2 mole % residues of at least one diester (or diacid) other than dimethyl terephthalate and/or at least 2 mole % at least one diol other than ethylene glycol.

Examples of suitable diester (or diacid) comonomers can include, but are not limited to, terephthalic acid, phthalic acid, isophthalic acid, naphthalene-2,6-dicarboxylic acid, cyclohexanedicarboxylic acid, cyclohexanediacetic acid, diphenyl-4,4'-dicarboxylic acid, dipheny-3,4'-dicarboxylic acid, 2,2,-dimethyl-1,3-propandiol, dicarboxylic acid, succinic acid, glutaric acid, adipic acid, azelaic acid, sebacic acid, and 1,4-cyclohexanedicarboxylic acid, alkyl esters thereof, and combinations thereof. Examples of suitable diol comonomers can include, but are not limited to, ethylene glycol (EG), diethylene glycol, triethylene glycol, 1,4-cyclohexanedimethanol, propane-1,3-diol, butane-1,4-diol, pentane-1,5-diol, hexane-1,6-diol, neopentylglycol, 3-methylpentanediol-(2,4), 2-methylpentanediol-(1,4), 2,2,4-trimethylpentane-diol-(1,3), 2-ethylhexanediol-(1,3), 2,2-diethylpropanediol-(1,3), hexanediol-(1,3), 1,4-di-(hydroxyethoxy)-benzene, 2,2-bis-(4-hydroxycyclohexyl)-propane, 2,4-dihydroxy-1,1,3,3-tetramethyl-cyclobutane, 2,2,4,4tetramethyl-cyclobutanediol, 2,2-bis-(3-hydroxyethoxyphenyl)-propane, 2,2-bis-(4-hydroxy-propoxyphenyl)-propane, isosorbide, hydroquinone, BDS-(2,2-(sulfonylbis)4, 1-phenyleneoxy))bis(ethanol), and mixtures thereof.

When present, the diester and/or diol comonomer can make up to 50 mole percent of the diester or diol component, based on the total residues of that component. For example, when one or more diester modifying comonomers are used (e.g., DMI), the PET resin can include at least 5, at least 10, at least 25, at least 30, at least 35, at least 40, or at least 45 mole percent and/or not more than 50, not more than 45, not more than 40, not more than 35, not more than 30, not more than 25, or not more than 20 mole percent of residues of the diester (or diacid) comonomer(s), based on the total moles of diester in the PET. Alternatively, or in addition, the PET resin can include at least 5, at least 10, at least 25, at least 30, at least 35, at least 40, or at least 45 mole percent and/or not more than 50, not more than 45, not more

than 40, not more than 35, not more than 30, not more than 25, or not more than 20 mole percent of one or more diol comonomers (e.g., NPG), based on the total moles of diol in the resin. In some cases, the comonomers can include recycled content comonomers (e.g., r-NPG, r-CHDM, r-DEG), while, in other cases, the comonomers may include non-recycled content, or may themselves be virgin comonomers.

In the reaction zone of the PET production facility, the transesterification (ester exchange) step or reaction can be carried out at a temperature of at least 175, at least 180, at least 185, at least 190, at least 195, at least 200, at least 205, at least 210, at least 215, at least 220, at least 235, at least 245 or at least 250°C and/or not more than 350, not more than 345, not more than 335, not more than 30, not more than 325, not more than 320, 310, not more than 300, not more than 285, or not more than 275°C, and a pressure of from -345 mbarg (-5 psig) to 2.4 barg (35 psig), 345 mbarg (5 psig) to 2.4 barg (35 psig), 689 mbarg (10 psig) to 1.7 barg (25 psig), or 827 mbarg (12 psig) to 1.4 barg (20 psig). The pressure of the ester exchange reaction can be at least 0 barg (0 psig), at least 345 mbarg (5 psig), at least 689 mbarg (10 psig), at least 1.7 barg (25 psig), at least 3.4 barg (50 psig), or at least 5.2 barg (75 psig) and/or not more than 6.9 barg (100 psig), not more than 5.2 barg (75 psig), not more than 3.4 barg (50 psig), not more than 1.7 barg (25 psig), not more than 1.4 barg (20 psig), not more than 689 mbarg (10 psig), or not more than 345 mbarg (5 psig).

The ester exchange section includes between 1-5 stages (e.g., reactors or vessels) in which transesterification between DMT and EG take place to form monomers and oligomers of PET. Any suitable type of reaction can be used to perform the transesterification step including, but not limited to, CSTRs, plug flow reactors, heat exchangers, horizontal reactors, vertical gravity driven reactors, falling film reactors, and even reactive distillation columns, as well as combinations of two or more of the above.

In some cases, the average chain length of the monomer and/or oligomer exiting the transesterification stage can be less than about 25, from about 1 to about 20, or from 5 to 15. Additionally, in some cases, the DMT conversion after transesterification can be at least 90, at least 92, at least 95, at least 97, or at least 99 percent. As used herein, the term "conversion" is used to describe a property of the liquid phase of a stream that has been subjected to transesterification, wherein the conversion of the esterified stream indicates the percentage of the original ester end groups that have been converted (i.e., transesterified) to other ester groups. Conversion can be quantified as the number of converted end groups (i.e., alcohol end groups) divided by the total number of end groups (i.e., alcohol plus DMT end groups), expressed as a percentage. While conversion is used herein, it should be understood that average chain length, which describes the average number of monomer units that a compound comprises, could also be appropriate for describing the characteristics. In some cases, the average chain length of the monomer and/or oligomer exiting the transesterification stage can be less than about 25, from about 1 to about 20, or from 5 to 15.

After transesterification, the r-PET oligomers are then subjected to further polymerization, or polycondensation, in the polymerization section of the reaction zone. During polycondensation, the r-PET oligomers react to form an r-PET polymer melt. The polymerization (polycondensation) reactions can be performed in 1-3 vessels or stages. During the polymerization, the monomer and oligomer end groups further react, releasing EG, residual methanol, water, diethylene glycol (DEG), and other glycols (when present), which can then permit the polymer weight to build. Vapors removed from the polymerization (or polycondensation) section can be distilled to separate out desirable components (e.g., EG and methanol), which can then be reused in various parts of the process, as discussed in detail further with respect to FIGS. 3 and 4.

Typically, polycondensation can be carried out at a temperature in the range of from 220°C to 350°C, or 240°C to 320°C and a sub-atmospheric (i.e., vacuum) pressure. When polycondensation is carried out in a two-stage process, the pre-polymerization (or prepolymer) reactor can convert the monomer and oligomer exiting the transesterification stage into an oligomer/polymer mixture having an average chain length in the range of from 2 to 40, from 5 to 35, or from 10 to 30. The finisher reactor can then convert the oligomer/polymer mixture into a final polyester product (e.g., polymer melt) having the desired average chain length and IV. In some cases, the r-PET polymer melt can have a trimer concentration of not more than 1, not more than 0.5, or not more than 0.1 weight percent, based on the total weight of r-PET polymer melt. Additionally, the polycondensation reaction can be performed in the presence of at least one polycondensation catalyst present in an amount of at least 0.1, at least 10, at least 25, at least 50, at least 100, or at least 250 ppm and/or not more than 500, not more than 350, not more than 250, not more than 100 ppm, based on the weight of PET. Examples of polycondensation catalysts can include at least one catalytically active metal compound such as titanium, aluminum, antimony, germanium, cobalt, alkali metals, and alkaline earth metals, magnesium, calcium, and combinations thereof.

A phosphorous stabilizer may be added during, or even after, polymerization. The phosphorous stabilizer deactivates the catalyst, thereby stabilizing the polymer. Examples of phosphorous stabilizer include phosphate esters (MERPOL A®) or phosphoric acid. Other additives can also be introduced into the process at various points, including colorants (e.g., red and/or blue toners) or reheat (IR) enhancers such as black iron oxide, reduced antimony catalyst, carbon black, and titanium nitride. When present, the reheat (IR) enhancer can be present in an amount of at least 0.1, at least 0.5, at least 1, or at least 1.5 weight percent and/or not more than 5, not more than 3, not more than 2, not more than 1, or not more than 0.5 weight percent, based on the total weight of r-PET (or r-PET particles).

The polymerization reaction may be performed in any type of reactor, including, but not limited to, a pipe reactor, a

trayed reactor, a plug flow reactor, a falling film reactor, or even a reactive distillation column. In some cases, the polymerization step may comprise two sub-steps (pre-polymerization and finishing) performed in different reaction vessels. In other cases, the entire polymerization reaction may be performed in a single step.

In some cases, the rate of polymerization (polycondensation) can be adjusted to achieve the desirable degree of polymerization or inherent viscosity. For example, the mass transfer rate during at least a portion, or all, of the polymerization step may be at least 1, at least 1.25, at least 1.5, at least 1.75 or at least 2 number average degree(s) of polymerization (DP) per minute (DP/min).

The r-PET polymer melt exiting the polymerization zone can have an inherent viscosity (IV) of at least 0.50, at least 0.52, at least 0.55, at least 0.57, at least 0.60, at least 0.62, at least 0.65, at least 0.67, at least 0.68, at least 0.69, at least 0.70, at least 0.71, at least 0.72, at least 0.73, at least 0.74, at least 0.75, at least 0.76, at least 0.77, at least 0.78, at least 0.79, or at least 0.80 dL/g. Additionally, or in the alternative, the r-PET polymer melt withdrawn from the reaction zone of the PET production facility can have an inherent viscosity (IV) of not more than 1.10, not more than 1.07, not more than 1.05, not more than 1.02, not more than 1.0, not more than 0.97, not more than 0.95, not more than 0.94, not more than 0.93, not more than 0.92, not more than 0.91, not more than 0.90, not more than 0.89, not more than 0.88, not more than 0.87, not more than 0.86, not more than 0.85, not more than 0.84, not more than 0.83, not more than 0.82, not more than 0.81, not more than 0.80, not more than 0.79, or not more than 0.78 dL/g, or it can be in the range of from 0.50 to 1.10 dL/g, 0.60 to 0.95 dL/g, 0.65 to 0.90 dL/g, or 0.73 to 0.85 dL/g, or 0.75 to 0.83 dL/g. The inherent viscosity (IV) is measured at 25°C in 60/40 wt/wt phenol/tetrachloroethane, unless otherwise noted.

Referring again to FIG. 2, the r-PET polymer melt removed from the reaction zone can be pelletized and then crystallized to form recycled content PET (r-PET) particles. As shown in FIG. 2, once the polyester polymer has completed melt phase polymerization, it can be formed into particles, which are solid at 25°C and 1 atmosphere. The r-PET particles can be of any suitable shape including, but not limited to, spheres, cubes, pellets, chips, pastilles, stars, and combinations thereof. In some cases, the particles have a number average weight of at least 0.10, at least 1.0, or at least 50 g per 100 particles. The volume of particles is not particularly limited, but there can be provided a bulk of particles having a volume of at least 1, at least 3, or at least 5 cubic meters.

The method of pelletizing the r-PET polymer melt is not limited. For example, in some cases, the molten PET may be directed through a die, cut, or directed through a die and then cut to form the r-PET particles. A gear pump or a single or twin-screw extruder may be used to provide the motive force for the melt to pass through the die, and once through the die, the polyester melt can be cut at the die head. In some cases, the die head may be under a liquid (such as water or other aqueous liquid), so that the particles are immediately contact the liquid upon being extruded through the die and cut. This method is generally referred to as underwater cutting. In some cases, the r-PET particles are formed by subjecting the r-PET polymer melt to underwater cutting.

After being cut, the r-PET particles can optionally be at least partially dried and can then be crystallized to form crystalline r-PET particles. Any suitable method of crystallization can be used and the particles can, for example, be thermally crystallized in a gas or liquid. The crystallization vessel can be mechanically agitated, a fluidized bed, a bed agitated by fluid movement, an unagitated vessel or pipe, or contacted with a crystallization liquid medium at a temperature above the glass transition temperature (Tg) of the polyester. In some cases, the crystallization can be latent heat crystallization and may be performed without addition of external heat or energy. Instead, the heat of crystallization comes from the particles themselves.

In some cases, the polymer may be fed to a crystallizer at a polymer temperature below its Tg, or it may be fed to a crystallizer at a polymer temperature above its Tg. For example, molten polymer from the melt phase polymerization reactor may be fed through a die plate and cut underwater, and then immediately fed to an underwater thermal crystallization reactor where the polymer can be crystallized under water. Alternatively, the molten polymer may be cut, allowed to cool to below its Tg, and then fed to an underwater thermal crystallization apparatus. Or, the molten polymer may be cut in any conventional manner, allowed to cool to below its Tg, optionally stored, and then crystallized. Optionally, the crystallized polyester spheroids may be solid stated according to known methods.

As used herein, "solid state polymerization" refers to a process in which the polymer chain lengths are increased by heating the polyester in the substantial absence of oxygen and water. During solid state polymerization, the polymer is in a solid form and not in the melt phase. In some cases, the crystallized polyester spheroids are not solid stated, such that less than 10, less than 5, less than 2, less than 1, or less than 0.5 percent of the total inherent viscosity (IV) can be added to the final r-PET after polycondensation. Accordingly, the difference in inherent viscosity (IV) between the r-PET polymer melt and the crystallized r-PET particles can be not more than 0.25, not more than 0.20, not more than 0.15, not more than 0.10, or not more than 0.05 dL/g.

In some cases, crystalline r-PET can exhibit at least two melting peaks on a DSC first heating scan. As used herein, "melting point" refers to the peak temperature of endotherms on a differential scanning calorimeter (DSC) which increases the temperature upward at a rate of 20 °C/min on a sample weighing about 10 mg. It is not necessary to run a DSC analysis on the particles, but only that the particles have the stated morphology. The stated tests reveal the properties of the polymer and need only be run to determine whether or not a polymer has or does not have the stated characteristics.

When the r-PET particles exhibit at least two melting peaks, the low peak melting point is considered to be Tm1a, as explained further below, which is classified as a melting peak when the area under the heating curve on a DSC first heating scan is at least the absolute value of 1 J/g. If two or more peaks appear on a heating curve from a DSC first heating scan, the first peak is the low peak melting point Tm1a, and the second peak is the high peak melting point Tm1b such that Tm1a < Tm1b. The low peak melting point of the polymer particles is within a range of 130°C to 220°C. Preferably the low peak melting point of the polyester polymer has a peak temperature of at least 140°C, or at least 150°C, or at least 160°C, or at least 170°C, and does not exceed 210°C, or 200°C, or 195°C.

After crystallization, the r-PET particles can be contacted with a vapor stream to strip out acetaldehyde (AA) and other undesirable components. This stripping step can be carried out with a gas temperature of at least 25, at least 30, at least 35, or at least 40°C and/or not more than 60, not more than 55, not more than 50, or not more than 45°C, and a pressure within 35 kPag (5 psig), within 14 kPag (2 psig), or within 7 kPag (1 psig) of atmospheric. The average residence of the r-PET particles in the stripping zone is from 1 to 24 hours, depending on the temperature of the gas and mass ratio of gas to particles. The residual AA content of the stripped r-PET particles can be not more than 20, not more than 15, not more than 10, not more than 5, not more than 2, not more than 1, or not more than 0.5 ppm of AA. Suitable gases can include inert gases such as air, carbon dioxide, or nitrogen, which may or may not be dried. The gas can be passed through the particles co-currently or counter currently and the step can be performed in a vessel continuously or batchwise.

In some cases, the r-PET particles can be in the shape of spheroids. As used herein, a "spheroid" is a particle which is substantially but imperfectly spherical or nearly spherical or globular in shape. It is different from slabs, cylinders, pastilles, cones, rods, or irregularly shaped particles with corners. Spheroids have a combination of characteristics. For example, spheroids will not stand on either end of the long axis through their center, and they preferably but not necessarily have a y/x ratio of less than 2, where y is the long axis and x is the short axis. Also, when 10.0g of particles are placed near one edge of a smooth horizontal steel plate in a grouping one pellet thick, and the plate is smoothly and gradually elevated at that edge to tilt the plate, spheroids will roll from the plate such that no more than 0.5g of particles remain on the plate when the plate first makes an angle of 13 degrees with respect to the horizontal. The spheroids may be spherical, elliptical, oval, and may have tails.

Spheroids can have a peak mode in a roundness distribution less than 1.4, or less than 1.3, or less than 1.2. The roundness of a spheroid is defined as perimeter$^2$/(4$\pi$ x area). "Perimeter" and "area" are defined in the context of a cross-sectional view of a spheroid.

In some cases, the crystalline r-PET particles can comprise spheroids with the melt characteristics as described below. For example, in some cases, the r-PET can have a melting point characterized by (a) at least two melting peaks, wherein one of said at least two melting peaks when measured on a DSC first heating scan is a low peak melting point having a peak temperature within a range of 140°C to 220°C and having a melting endotherm area of at least the absolute value of 1 J/g, or (b) one or more melting points which, when measured on a DSC first heating scan, has a heating curve departing from a baseline in the endothermic direction at a temperature of less than or equal to 200°C. Alternatively, or in addition, the r-PET particles can have a low degree of crystallinity within a range of at least 20% and a maximum degree of crystallinity Tcmax defined by the equation:

$$Tcmax = 50\% - DE - OH$$

where DE is the total mole % of all diester residues other than dimethyl terephthalate residues, based on 100 mole% of diester residues in the PET, and OH is the total mole % of hydroxyl functional compound residues other than ethylene glycol residues, based on 100 mole% of the hydroxyl functional compounds residues.

In some cases, the r-PET particles can be crystallized to a degree of crystallization of at least a 15, at least 20, at least 25, at least 30, at least 35, or at least 40 percent. Pellet crystallinity is determined using Differential Scanning Calorimetry (DSC). The sample weight for this measurement is 10$\pm$1 mg and the sample consists of either (1) a portion of a single pellet, or more preferably (2) a sample taken from several grams of cryogenically ground particles. The first heating scan is performed. The sample is heated from approximately 25°C to 290°C at a rate of 20°C/minute, and the absolute value of the area of the melting endotherms (one or more) minus the area of any crystallization exotherms is determined. This area corresponds to the net heat of melting and is expressed in Joules. The heat of melting of 100% crystalline PET is taken to be 119 Joules/gram, so the weight fraction crystallinity of the pellet is calculated as the net heat of melting divided by 119. Unless otherwise stated, the initial melting point in each case is also determined using the same DSC scan. The percent crystallinity is calculated from both the low peak melting point (Tma1) and the high peak melting point (Tmb1).

As discussed previously, the r-PET particles formed as described herein may not be solid state polymerized. When not solid stated, the r-PET particles can have a smaller surface-to-center molecular weight gradient between the surface and the center of the particles than can be found in solidstated polyester particles. In some cases, the polyester polymer particles have a surface and a center, and the intrinsic viscosity (It.V.) at the surface of the particle can be less than 0.25, less than 0.20, less than 0.15, less than 0.10, or less than 0.05 dL/g higher than the It.V. at the center of the particle.

As used herein, the "surface of the pellet" is defined as the outer 8 to 12% by mass, while the "center" is defined as

the inner 8 to 16% by mass around the particle center point. While the center point of an irregular shaped particle may be difficult to precisely determine, it is the best approximation of the intersection between most of the straight lines that can be drawn through the particle between the edges or corners having the longest distance from each other. To measure the It.V. of the surface and the center, a random sampling of 10 particles from a batch is gradually dissolved according to the procedure set forth in the Examples, the weighted average of all measured cuts within the first 8-12 mass % dissolved being the surface of the pellet is recorded as It.V. surface, and the weighted average of all measured cuts within the last 8-16 mass% being the center is recorded as the It.V. center, and gradient being the difference between It.V. surface less the It.V. center. The number of measurements taken within each range is not limited, and can be as few as one measurement. The GPC method described herein is used to separately measure the It.V. of each portion dissolved. In this way, a gradient starting from the surface of the particle all the way through to the center of the particle may be measured, taking only a surface and a center cut or as many cuts throughout the particle as one desires. Alternately, the particle is sliced with a microtome, a piece of the surface is cut away, a piece of the center is cut away, and they are then separately measured by the GPC method described herein.

The intrinsic viscosity (It.V.) values described herein are calculated from the inherent viscosity (IV) measured at 25°C in 60/40 wt/wt phenol/tetrachloroethane. The inherent viscosity is calculated from the measured solution viscosity. The following equations describe such solution viscosity measurements and subsequent calculations to IV and from IV to It.V:

$$\eta_{inh} = [\ln (t_s/t_o)]/C$$

where $\eta_{inh}$ = Inherent viscosity at 25°C at a polymer concentration of 0.50 g/ 100 mL of 60% phenol and 40% 1,1,2,2-tetrachloroethane

In = Natural logarithm
$t_s$ = Sample flow time through a capillary tube
$t_o$ = Solvent-blank flow time through a capillary tube
C = Concentration of polymer in grams per 100 mL of solvent (0.50%)

The intrinsic viscosity is the limiting value at infinite dilution of the specific viscosity of a polymer. It is defined by the following equation:

$$\eta_{int} = \lim_{C \to 0} (\eta_{sp}/C) = \lim_{C \to 0} \ln (\eta_r/C)$$

where

$\eta_{int}$ = Intrinsic viscosity
$\eta_r$ = Relative viscosity = $t_s/t_o$
$\eta_{sp}$ = Specific viscosity = $\eta_r$ - 1

Instrument calibration involves replicate testing of a standard reference material and then applying appropriate mathematical equations to produce the "accepted" IV values.

Calibration Factor = Accepted IV of Reference Material / Average of Replicate Determinations

$$\text{Corrected IV} = \text{Calculated IV} \times \text{Calibration Factor}$$

The intrinsic viscosity (It.V. or $\eta_{int}$) may be estimated using the Billmeyer equation as follows:

$$\eta_{int} = 0.5\,[e^{0.5 \times \text{Corrected IV}} - 1] + (0.75 \times \text{Corrected IV})$$

Recycled content PET formed as described herein can include a diester component comprising at least 50, at least 55, at least 60, at least 65, at least 70, at least 75, at least 80, at least 85, at least 90, at least 95, or at least 99 mole percent of residues of dimethyl terephthalate (DMT), based on the total moles in the diester component; and a diol

component comprising at least 50 at least 55, at least 60, at least 65, at least 70, at least 75, at least 80, at least 85, at least 90, at least 95, or at least 99 mole percent of residues of ethylene glycol (EG), based on the total moles in the diol component.

All the compounds containing ester groups (or corresponding acid groups) present in the r-PET comprise the "diester component," and the mole percent of all the compounds containing ester groups in the r-PET totals 100. The residues of compound(s) containing ester groups in the r-PET refers to the portion of the compound(s) which remains in the oligomer and/or polymer chain after the condensation reaction with a compound(s) containing hydroxyl group(s). The residues of the diester component refers to the portion of the component which remains in the oligomer and/or polymer chain after the component is condensed with a compound containing hydroxyl group(s).

All the compounds containing hydroxyl group(s) or derivatives thereof that become part of the r-PET comprise the "diol component," and the mole percent of all the compounds containing hydroxyl groups in the r-PET totals 100. The residues of compound(s) containing hydroxyl group(s) that become part the r-PET to the portion of the compound(s) which remains in the r-PET after the compound(s) is condensed with a compound(s) containing diester group(s) or and further polycondensed with polymer chains of varying length. The residues of the diol component refer to the portion of the component which remains in the r-PET. The mole percentages of the hydroxyl residues and diester residues in the r-PET can be determined by proton NMR.

In some cases, the r-PET can include not more than 0.1, not more than 0.05, or not more than 0.01 mole percent of residues of one or more (or each) of the following components: 4-methyl formyl benzoate, dimethyl 1,4-cyclohexanedicarboxylate, dimethyl phthalate, methyl isopropyl terephthalate, methyl propyl terephthalate, and methyl isobutyl terephthalate. Such components can be found in virgin DMT and may be absent or substantially absent from r-DMT used to produce r-PET as described herein. In some cases, the r-PET can include not more than 0.5, not more than 0.1, or not more than 0.05 mole percent of residues of methyl ethyl terephthalate, based on the total moles of the diester component.

Alternatively, or in addition, the r-PET may include at least 0.1, at least 0.5, at least 0.75, or at least 1 mole percent and/or not more than 2, not more than 1.5, or not more than 1 mole percent of residues of one or more (or each) of the following components: diisobutyl phthalate, methyl 4-ethylbenzoate, and methyl 4-vinylbenzoate. Such components are not found in virgin DMT but may be present in the r-DMT used to form the r-PET as described herein. Other components that may be present in such amounts include, for example, methyl 4-acetylbenzoate, methyl cyanobenzoate, nonylphenol, methyl stearate, methyl laurate, methyl 4-bromobenzoate, diethylene glycol methyl ether, methyl caprylate, 4-methylene cyclohexylmethanol, and dimethyl 9-oxo-9H-fluorene-2,6-dicarboxylate.

In some cases, the r-PET may be DMT-based PET and may include little or no residues of terephthalic acid (TPA). For example, the crystalline r-PET (or r-PET particles) can include not more than 0.50, not more than 0.25, not more than 0.10, or not more than 0.05 mole percent of residues of terephthalic acid, based on the total moles of the diester component. In some cases, the absence of TPA from the system may result in lower *in situ* formation of diethylene glycol (DEG) and the r-PET (or r-PET particles) can have a DEG content of not more than 1.75, not more than 1.5, not more than 1.25, not more than 1, not more than 0.75, or not more than 0.5, not more than 0.45, or not more than 0.40 mole percent, based on the total moles of the diol component. Additionally, or in the alternative, the amount of DEG present in the crystalline r-PET (or r-PET particles) described herein can be at least 0.1, at least 0.2, at least 0.25, at least 0.30, or at least 0.35 mole percent, based on the total moles of the diol component.

In some cases, the r-PET may not include little or no residues of isophthalate, which can originate from the addition of isophthalic acid (IPA) and/or dimethyl isophthalate (DMI) to the reaction zone. For example, the crystalline r-PET (or r-PET particles) can include not more than 0.50, not more than 0.25, not more than 0.10, or not more than 0.05 mole percent of residues of isophthalate, based on the total moles of the diester component. In other cases, isophthalate residues may be used as an acid comonomer and may fall within one or more of the ranges discussed herein.

In some cases, the r-PET may also not include other components typically associated with TPA-based PET. For example, in some cases, the r-PET can comprise not more than 100, not more than 75, not more than 50, not more than 25, or not more than 10 ppm of cobalt (Co) and/or bromide (Br), which are typically present in the process for forming TPA. Additionally, or alternatively, the r-PET can comprise not more than 100, not more than 75, not more than 50, not more than 25, or not more than 10 ppm of one or more metals selected from manganese (Mn), zinc (Zn), and combinations thereof. In some cases, the PET can include not more than 0.1, not more than 0.05, or not more than 0.01 mole percent of residues of 4-carboxybenzaldehyde and 9-fluoreneone-2,6-dicarboxylic acid, based on the total moles of the PET. These components are typical intermediates in a TPA-based PET process and would not be present (or present in very minor amounts) in DMT-based PET.

Additionally, in some cases, the r-PET formed from r-DMT as described herein may include at least 5, at least 7, at least 10, at least 12, at least 15, or at least 20 percent and/or not more than 30, not more than 27, not more than 25, not more than 17, or not more than 15 percent of methyl end groups, based on the total number of end groups. PET including TPA-based terephthalyl residues typically does not have methyl end groups within these ranges. In some cases, the r-PET can have a carboxyl number less than 15, less than 10, less than 7, less than 5, or less than 2 meq/kg.

The r-PET can have a b* color less than 2, less than 1, or less than 0, or in the range of from -2 to 2, from -1.5 to 1.5, or -1 to 0. Additionally, or in the alternative, the r-PET can have an L* color greater than 70, greater than 75, greater than 80, or greater than 85 and/or not more than 95, not more than 92, not more than 90, or not more than 87.

As discussed herein, the r-PET can include one or more comonomers modifying the diester and/or diol components of the resin. The modifying monomer(s) can include a modifying diol, a modifying diester (or acid), or both a modifying diol and diester (or acid). Examples of modifying monomers include, but are not limited to, 1,4-cyclohexanedimethanol (CHDM), neopentyl glycol (NPG), isophthalic acid (IPA), dimethyl isophthalate (DMI), and diethylene glycol (DEG). One or more of the modifying monomers can include recycled content. In some cases, the r-PET includes at least 1, at least 5, at least 10, at least 15, at least 20, at least 25, at least 30, at least 35, or at least 40 mole percent and/or not more than 50, not more than 45, not more than 40, not more than 35, not more than 30, not more than 25, not more than 20, not more than 15, not more than 10, or not more than 5 mole percent of at least one modifying monomer, based on the total moles of the diester component, the diol component, or both.

The r-PET may be used in a variety of end use applications, including as sheets, films, trays, rods, tubes, lids, bottles (water bottles, hot fill bottles, and carbonated soft drink bottles), as well as packaging and filaments and fibers. Additionally, the r-PET may be used to form injection molded articles.

As discussed herein, in some cases, the methanolysis facility and the PET production facility may be co-located. When co-located, one or more streams from one facility may be transported to and utilized in the other, which integrates the facilities. Such integration can reduce energy use and increase overall process efficiency, while permitting production of up to 100 percent recycled content PET.

Turning now to FIG. 3, a portion of a chemical recycling facility including co-located methanolysis and PET production facilities is shown. In some cases, the chemical recycling facility can further include a co-located and integrated plastics processing facility as shown in FIGS. 1 and 2. When integrated, the facilities could share utilities such as furnaces, steam, condensate, heat transfer media (HTM), cooling tower water, chilled water, nitrogen, city water, wastewater treatment, flare systems, and catalyst systems. Additionally, they can share facilities like office facilities, warehouse facilities, etc. Plastic processing and its related components and streams may also be co-located and integrated with the methanolysis and/or PET facilities.

Referring again to FIG. 3, r-DMT and/or r-EG from the methanolysis facility can be introduced into an ester exchange zone of the PET production facility, optionally with DMT (or r-DMT) and/or EG (or r-EG) from another source (not shown). When the methanolysis and PET production facilities are co-located and in fluid communication with one another, the r-DMT and/or r-EG can be transported between the two facilities with little or no cooling or separation. For example, the temperature of the r-DMT can be maintained above a minimum temperature of at least 125, at least 130, at least 135, at least 140, at least 145, or at least 150°C as it is transported from the methanolysis facility to the PET production facility (e.g., from the outlet of the r-DMT vessel in the methanolysis facility to the inlet of the vessel in the PET production facility). Additionally, at least 85, at least 90, at least 95, at least 97, at least 99, or 100 percent of the r-DMT removed from the methanolysis facility can be introduced into the PET facility. Similarly, the temperature of the r-EG can be maintained above a minimum temperature of at least 125, at least 130, at least 135, at least 140, at least 145, or at least 150°C as it is transported from the methanolysis facility to the PET production facility. Additionally, at least 85, at least 90, at least 95, at least 97, at least 99, or 100 percent of the r-EG removed from the methanolysis facility can be introduced into the PET facility.

In some cases, the total travel path (or transport path) of the r-EG and/or r-DMT (e.g., between the outlet in the methanolysis facility to the inlet of the PET facility) can be less than 8 km (5 miles), less than 4.8 km (3 miles), less than 3.2 km (2 miles), less than 1.6 km (1 mile), or less than 457 m (1500 feet), less than 305 m (1000 feet), or less than 152 m (500 feet), measured between the outlet in the methanolysis facility to the inlet of the PET facility. Or the total travel path can be at least 30.5 m (100 feet), at least 152 m (500 feet), at least 805 m (0.5 miles), at least 1.6 km (1 mile), or at least 3.2 km (2 miles) and/or not more than 8 km (5 miles), not more than 6.4 km (4 miles), not more than 4.8 km (3 miles), not more than 3.2 km (2 miles), not more than 2.4 km (1.5 miles), or not more than 1.6 km (1 mile).

Additionally, there may be little or no intermediate storage for r-DMT and/or r-EG between the two facilities and, for example, there may be not more than 5, not more than 4, not more than 3, not more than 2, or not more than 1 day worth of intermediate storage (e.g., tankage) for r-DMT and/or r-EG between the two facilities.

In other cases, the PET and methanolysis facilities may be remotely located from one another but may still be integrated. For example, vapors from the methanolysis facility may be cooled and condensed, and the condensed vapors may be transported to the methanolysis facility. In such cases, the interim storage between the two facilities may be sufficient for more than 5, at least 10, at least 15, at least 20 or more days and may be co-located with the methanolysis facility, the PET production facility, or remotely located from both.

Referring again to FIG. 3, during the ester exchange reaction conducted in the reaction zone of the PET production facility between DMT and EG, methanol is released as a byproduct and may be collected in the vapor phase from the ester exchange step and introduced into a distillation zone. Further, additional methanol and vaporized EG (as well as other vaporized byproducts and comonomers) from the polymerization zone can also be collected and sent to the

distillation zone. In some cases, one or more streams withdrawn from the reaction zone and introduced into the distillation zone can include at least 0.5, at least 1, at least 2, or at least 5 and/or not more than 10, not more than 7, not more than 5, not more than 2, or not more than 1 weight percent of terephthalyl components, based on the total weight of the stream.

In the distillation step or zone, one or more distillation columns may be used to separate the DMT (r-DMT) or terephthalyl components (r-terephthalyl components), EG (r-EG), methanol (r-methanol), and other components such as water, low boilers (e.g., components with boiling points lower than methanol and/or EG), and high boilers (e.g., components with boiling points higher than EG). As shown in FIG. 3, at least a portion of the r-methanol recovered from the distillation zone of the PET production facility can be introduced into the reaction zone of the methanolysis facility. In some cases, at least 50, at least 60, at least 70, at least 80, at least 90, at least 95, or at least 99 percent of the methanol recovered from the PET production facility can be used in the methanolysis facility reaction zone. Further, as also shown in FIG. 3, all or a portion of the methanol recovered in the production separation zone of the methanolysis facility can also be returned to the reaction zone for further use. As also illustrated in FIG. 1, the EG (r-EG) recovered in the distillation zone of the PET facility can be returned to the ester exchange zone of the PET facility and used in the ester exchange reaction. Additionally, one or more of the streams returned to the distillation zone may include DMT (r-DMT), which may be separated and reintroduced into the reaction zone of the PET facility.

Turning now to FIG. 4, another portion of a chemical recycling facility that includes integrated methanolysis and PET production facilities is shown, particularly illustrating a case where the methanolysis facility and PET production facility share a common distillation zone. As shown in FIG. 4, once the PET waste plastic is subjected to methanolysis in the reaction zone, the methanolysis reactor stream can be separated into lighter and heavier organic streams in the product separation zone. The heavy organics stream, which includes predominantly DMT, can be further separated in the heavy organics separation zone, but the light organics stream, which includes predominantly methanol and EG, can be separated in one or more distillation columns that are also separating streams comprising methanol and/or EG from the ester exchange and polymerization zones of the PET production facility. These streams may also include terephthalyl components. In some cases, the shared distillation column or columns may provide streams concentrated in EG, streams concentrated in methanol, or other co-product streams.

When introduced into a shared distillation column, streams from the methanolysis facility (e.g., methanolysis reactor product streams) and streams from the reaction zone of the PET production facility may be combined prior to entering the column, or each may be introduced separately. In some cases, one or both streams may be heated or cooled as needed to maintain temperature and/or concentration profiles throughout the column, and the streams may be vapor-phase streams, liquid-phase streams, or mixed phase (vapor and liquid) streams when introduced into the column.

In some cases, the shared column may be an EG separation column for removing EG (r-EG) from the incoming feed stream(s), and the vapor stream from the PET production facility may comprise predominantly EG. In some cases, the shared column may be a methanol separation column for removing methanol from the incoming feed stream(s), and the vapor stream withdrawn from the PET production facility (or ester exchange zone) may comprise predominantly methanol. In some cases, the shared column can be a spray column downstream of the methanolysis reactor and the stream from the PET production facility can comprise r-EG, r-methanol, and r-DMT (or r-terephthalyl components).

In some cases, at least a portion of the vapor streams removed from the reaction zone (e.g., ester exchange zone and/or polymerization zone) of the PET production facility can be decanted with water to provide an organic phase and an aqueous phase. Contact with water may help remove at least a portion of the EG azeotrope-forming compounds, which may also form azeotropes with EG also azeotrope with water. In some cases, the decanting step (when performed) can remove at least 50, at least 60, at least 70, at least 75, at least 80, at least 90, or at least 95 percent of the EG azeotrope-forming compounds from the PET reaction zone vapor stream introduced into the distillation zone and into at least one distillation column therein. When solid stating is performed, an overhead stream from the solid stating zone may also be introduced into the distillation zone, optionally decanted with water prior to introduction.

In some cases, removal of compounds that form EG (and/or water) azeotropes from the PET facility vapor streams (e.g., from ester exchange, polymerization, solid stating, when present, or even from the crystallization zone) can result in lower energy usage for one or more distillation columns used to separate streams from the methanolysis and/or PET production facility.

Additionally, or alternatively, in some cases, at least a portion of the vapor stream from the PET reaction zone (or crystallization or solid stating, when present) can be directly introduced into one or more distillation columns of the shared distillation zone, which can help increase energy efficiency. In other cases, at least a portion, or all, of these streams may be condensed prior to being separated in the distillation zone.

Further, in some cases as generally shown in FIG. 4, the reaction zone of the methanolysis facility and the ester exchange zone of the PET facility can share a common catalyst source. This can occur, for example, when the same catalyst is used by both reaction zones. The catalyst can be of the same type and present in amounts as described herein.

**DEFINITIONS**

It should be understood that the following is not intended to be an exclusive list of defined terms. Other definitions may be provided in the foregoing description, such as, for example, when accompanying the use of a defined term in context.
As used herein, the terms "a," "an," and "the" mean one or more.
As used herein, the term "and/or," when used in a list of two or more items, means that any one of the listed items can be employed by itself or any combination of two or more of the listed items can be employed. For example, if a composition is described as containing components A, B, and/or C, the composition can contain A alone; B alone; C alone; A and B in combination; A and C in combination, B and C in combination; or A, B, and C in combination.
As used herein, the phrase "at least a portion" includes at least a portion and up to and including the entire amount or time period.
As used herein, the term "chemical recycling" refers to a waste plastic recycling process that includes a step of chemically converting waste plastic polymers into lower molecular weight polymers, oligomers, monomers, and/or non-polymeric molecules (e.g., hydrogen, carbon monoxide, methane, ethane, propane, ethylene, and propylene) that are useful by themselves and/or are useful as feedstocks to another chemical production process(es).
As used herein, the term "monomer" refers to a polymeric species comprising less than about three chain lengths.
As used herein, the term "oligomer" refers to a polymeric species comprising in the range of from about 7 to about 50 chain lengths.
As used herein, the term "polymer" refers to a polymeric species comprising greater than about 50 chain lengths.
As used herein, the terms "polyethylene terephthalate" and "PET" include PET homopolymers, PET copolymers, and PETG.
As used herein, the term "PET copolymer" refers to PET that has been modified by up to 10 mole percent with one or more added comonomers. For example, the term "PET copolymer" includes PET modified with up to 10 mole percent isophthalic acid on a 100 mole percent carboxylic acid basis. In another example, the term "PET copolymer" includes PET modified with up to 10 mole percent 1,4-cyclohexane dimethanol (CHDM) on a 100 mole percent diol basis.
As used herein, the term "residue" refers to the moiety that is the resulting product of the chemical species in a particular reaction scheme or subsequent formulation or chemical product, regardless of whether the moiety is actually obtained from the chemical species.
As used herein, the term "co-located" refers to the characteristic of at least two objects being situated on a common physical site, and/or within 1.6 km (one mile) of each other.
As used herein, the terms "comprising," "comprises," and "comprise" are open-ended transition terms used to transition from a subject recited before the term to one or more elements recited after the term, where the element or elements listed after the transition term are not necessarily the only elements that make up the subject.
As used herein, the term "commercial scale facility" refers to a facility having an average annual feed rate of at least 227 kg (500 pounds) per hour, averaged over one year.
As used herein, the term "D90" refers to a specified diameter where ninety percent of a distribution of particles has a smaller diameter than the specified diameter and ten percent has a larger diameter than the specified diameter. To ensure that a representative D90 value is obtained, the sample size of the particles should be at least 454 g (one pound). To determine a D90 for particles in a continuous process, testing should be performed on at least 5 samples that are taken at equal time intervals over at least 24 hours. Testing for D90 is performed using high-speed photography and computer algorithms to generate a particle size distribution. One suitable particle size analyzer for determining D90 values is the Model CPA 4-1 Computerized Particle Analyzer from W.S Tyler of Mentor, Ohio.
As used herein, the term "diameter" means the maximum chord length of a particle (i.e., its largest dimension).
As used herein, the term "directly derived" refers to having at least one physical component originating from waste plastic.
As used herein, the terms "having," "has," and "have" have the same open-ended meaning as "comprising," "comprises," and "comprise" provided above.
As used herein, the term "heavy organic methanolysis coproduct" refers to a methanolysis coproduct with a boiling point greater than DMT.
As used herein, the term "heavy organic solvolysis coproduct" refers to a solvolysis coproduct with a boiling point greater than the principal terephthalyl product of the solvolysis facility.
As used herein, the terms "including," "include," and "included" have the same open-ended meaning as "comprising," "comprises," and "comprise" provided above.
As used herein, the term "indirectly derived" refers to having an assigned recycle content i) that is attributable to waste plastic, but ii) that is not based on having a physical component originating from waste plastic.
As used herein, the term "light organic methanolysis coproduct" refers to a methanolysis coproduct with a boiling point less than DMT.

As used herein, the term "light organics solvolysis coproduct" refers to a solvolysis coproduct with a boiling point less than the principal terephthalyl product of the solvolysis facility.

As used herein, the term "methanolysis coproduct" refers to any compound withdrawn from a methanolysis facility that is not dimethyl terephthalate (DMT), ethylene glycol (EG), or methanol.

As used herein, the terms "mixed plastic waste" and "MPW' refer to a mixture of at least two types of waste plastics including, but not limited to the following plastic types: polyethylene terephthalate (PET), one or more polyolefins (PO), and polyvinylchloride (PVC).

As used herein, the term "molecular reforming" refers to conversion of a carbon-containing feed into syngas (CO, CO2, and H2). Molecular reforming encompasses both steam reforming and partial oxidation (POX) gasification.

As used herein, "PET" means a homopolymer of polyethylene terephthalate, or polyethylene terephthalate modified with modifiers or containing residues or moieties of other than ethylene glycol and terephthalic acid, such as isophthalic acid, 1,4-cyclohexanedicarboxylic acid, diethylene glycol, TMCD (2,2,4,4-tetramethyl-1,3-cyclobutanediol), CHDM (cyclohexanedimethanol), propylene glycol, isosorbide, 1,4-butanediol, 1,3-propane diol, and/or NPG (neopentyl glycol), or polyesters having repeating terephthalate units (and whether or not they contain repeating ethylene glycol based units) and one or more residues or moieties of TMCD (2,2,4,4-tetramethyl-1,3-cyclobutanediol), CHDM (cyclohexanedimethanol), propylene glycol, or NPG (neopentyl glycol), isosorbide, isophthalic acid, 1,4-cyclohexanedicarboxylic acid, 1,4-butanediol, 1,3-propane diol, and/or diethylene glycol, or combinations thereof.

As used herein, the term "PET solvolysis" refers to a reaction by which a polyester terephthalate-containing plastic feed is chemically decomposed in the presence of a solvent to form a principal terephthalyl product and/or a principal glycol product.

As used herein, the term "physical recycling" (also known as "mechanical recycling") refers to a waste plastic recycling process that includes a step of melting waste plastic and forming the molten plastic into a new intermediate product (e.g., particles or sheets) and/or a new end product (e.g., bottles). Generally, physical recycling does not substantially change the chemical structure of the plastic, although some degradation is possible.

As used herein, the term "predominantly" means more than 50 percent by weight. For example, a predominantly propane stream, composition, feedstock, or product is a stream, composition, feedstock, or product that contains more than 50 weight percent propane.

As used herein, the term "pyrolysis" refers to thermal decomposition of one or more organic materials at elevated temperatures in an inert (i.e., substantially oxygen free) atmosphere.

As used herein, the term "recycle content" and "r-content" refer to being or comprising a composition that is directly and/or indirectly derived from waste plastic.

As used herein, the term "remotely located" refers to a distance of at least 8 km (5 miles), at least 16 km (10 miles), at least 80 km (50 miles), at least 161 km (100 miles), at least 805 km (500 miles), or at least 1,609 km (1000 miles) between two facilities, sites, or reactors.

As used herein, "solid state polymerization" refers to a process in which the polymer chain lengths are increased by heating the polyester in the substantial absence of oxygen and water. During solid state polymerization, the polymer is in a solid form and not in the melt phase.

As used herein, the term "solvolysis" or "ester solvolysis" refers to a reaction by which an ester-containing feed is chemically decomposed in the presence of a solvent to form a principal carboxyl product and/or a principal glycol product. Examples of solvolysis include, hydrolysis, alcoholysis, and ammonolysis.

As used herein, the term "solvolysis coproduct" refers to any compound withdrawn from a solvolysis facility that is not the principal carboxyl (terephthalyl) product of the solvolysis facility, the principal glycol product of the solvolysis facility, or the principal solvent fed to the solvolysis facility.

As used herein, the term "terephthalyl" refers to a molecule including the following group:

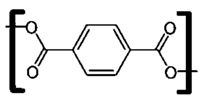

As used herein, the term "principal terephthalyl" refers to the main or key terephthalyl product being recovered from the solvolysis facility.

As used herein, the term "glycol" refers to a component comprising two or more -OH functional groups per molecule.

As used herein, the term "principal glycol" refers to the main glycol product being recovered from the solvolysis facility.

As used herein, the terms "waste plastic" and "plastic waste" refer to used, scrap, and/or discarded plastic materials. The waste plastic fed to the chemical recycling facility may be unprocessed or partially processed.

## ADDITIONAL CLAIM SUPPORTING DESCRIPTION - FIRST EMBODIMENT

In a first embodiment of the present technology there is provided a process for producing a recycled content polyethylene terephthalate (r-PET), the process comprising: (a) depolymerizing waste plastic comprising predominantly polyethylene terephthalate (PET) in a methanolysis reactor of a methanolysis facility to form at least recycled content ethylene glycol (r-EG) and recycled content dimethyl terephthalate (r-DMT); (b) reacting r-EG and/or r-DMT in a reaction zone of a PET production facility to form a recycled content PET polymer melt (r-PET polymer melt) having an inherent viscosity (IV) of at least 0.65 dL/g; (c) pelletizing at least a portion of the r-PET polymer melt to form r-PET particles; and (d) crystallizing at least a portion of the r-PET particles to form crystalline r-PET particles.

The first embodiment described in the preceding paragraph can also include one or more of the additional aspects/features listed in the following bullet pointed paragraphs. Each of the below additional features of the first embodiment can be standalone features or can be combined with one or more of the other additional features to the extent consistent. Additionally, the following bullet pointed paragraphs can be viewed as dependent claim features having levels of dependency indicated by the degree of indention in the bulleted list (i.e., a feature indented further than the feature(s) listed above it is considered dependent on the feature(s) listed above it).

- wherein the reacting of step (b) further comprising reacting non-recycled content EG and/or non-recycled content DMT.
- wherein the r-PET polymer melt withdrawn from the reaction zone has a trimer concentration of less than 1 (0.5, 0.1) weight percent, based on the total weight of the r-PET polymer melt.
- further comprising processing mixed plastic waste in a plastics processing facility to provide a predominantly PET waste plastic and depolymerizing the PET waste plastic in step (a).
    - wherein said processing includes sizing and/or separating mixed waste plastic.
    - wherein the PET waste plastic includes at least 75 (80, 85, 90, 95, or 99) weight percent of PET.
- wherein the depolymerizing is carried out in the presence of methanol.
    - wherein at least a portion of the methanol used in the depolymerizing originates from the **PET** production facility.
- further comprising pelletizing at least a portion of the r-PET polymer melt via underwater cutting to provide r-PET particles and crystallizing at least a portion of the r-PET particles in step (c).
- wherein at least a portion of the crystallizing is latent heat crystallizing.
- further comprising after the crystallizing stripping the r-PET with a gas stream to remove acetaldehyde (AA).
    - wherein the gas stream is selected from the group consisting of air, carbon dioxide, and nitrogen.
- wherein the r-PET is not solid state polymerized.
- wherein the crystalline r-PET comprises spheroidal particles.
    - wherein the crystalline r-PET comprises a plurality of spheroidal particles having an intrinsic viscosity (It.V.) at the surface of the particle that is less than 0.25 dL/g higher than the It.V. at the center of the particle.
- wherein the inherent viscosity (IV) of the r-PET is at least 0.70 (0.72, 0.73, 0.75, 0.77, 0.80, 0.82, 0.85) and/or not more than 1.05, 1.0, 0.95 (0.90, 0.85, 0.83) dL/g.
- wherein the r-PET polymer melt has an inherent viscosity (IV) in the range of from 0.73 to 0.85 dL/g.
- wherein the reacting includes subjecting the r-EG and r-DMT to ester exchange to produce recycled content PET oligomers (r-PET oligomers) and then polymerizing the r-PET oligomers to form the r-PET polymer melt.
    - wherein the ester exchange reaction is carried out at a temperature of at least 175, 180, 185, 190, 195, 200, 205, 210, 215, 220 and/or not more than 350, 345, 340, 335, 330, 325, or 320°C.
    - wherein the ester exchange reaction is carried out at a pressure within 69 mbarg (1 psig), 138 mbarg (2 psig), 345 mbarg (5 psig), or 689 mbarg (10 psig) of atmospheric.
    - wherein the ester exchange reaction is carried out at a pressure of at least 0 barg (0 psig), 345 mbarg (5 psig), 689 mbarg (10 psig), 1.7 bar (25 psig), 3.4 barg (50 psig), or 5.2 barg (75 psig) and/or not more than 6.9 barg (100 psig), 5.2 barg (75 psig), 3.4 barg (50 psig), 1.7 bar (25 psig), 1.4 barg (20 psig), 689 mbarg (10 psig), or 345 mbarg (5 psig).
    - wherein the ratio of EG to DMT introduced into the ester exchange reactor is at least 1.1 (1.2:1, 1.3:1, 1.4:1, or

1.5:1) and/or not more than 5:1 (4:1, 3.5:1, or 3:1).

◦ wherein the conversion of DMT after the ester exchange is at least 85 (90, 95, 97, or 99) percent.
◦ wherein the polymerizing is carried out at a temperature of at least 240 (245, 250, 255 or 260)°C and/or not more than 340 (335, 330, 325, 320, 315, 310, or 300)°C.
◦ wherein the polymerizing is carried out at a pressure of not more than atmospheric, or less than 750, 500, 250, 100, 50, or 20 Pa.
◦ wherein the polymerizing is carried out in the presence of a nonantimony catalyst.
◦ wherein the mass transfer rate during the polymerizing is at least 1.5 number average degree of polymerization (DP)/minute (min).

- wherein the reacting is carried out in a reactive distillation column.
- wherein the reacting is carried out in an CSTR, a pipe reactor, a plug flow reactor, a reactive distillation column, a falling film reactor, a horizontally agitated reactor, a vertical gravity-driven reactor, or combinations thereof.
- wherein the r-PET comprises at least one IR absorber additive.

◦ wherein the IR absorber additive is selected from the group consisting of black iron oxide, graphite, reduced antimony catalyst, carbon black, and titanium nitride.
◦ wherein the IR absorber additive is present in an amount of at least 0.10 (0.5, 1, 1.5) and/or not more than 5 (3, 2, 1, 0.5) weight percent, based on the weight of the r-PET.

- wherein said reacting further includes reacting the EG and DMT with one or more comonomers.

◦ wherein the one or more comonomers are selected from the group consisting of isophthalic acid, dimethyl isophthalate, neopentyl glycol, 1,4-cyclohexanedimethanol (1,4-CHDM), diethylene glycol, and combinations thereof.
◦ wherein the comonomers are present in the r-PET in a total amount of at least 5 (10, 15, 20, 25, 30, 35) mole percent and/or not more than 50 (45, 40, 35, 30, 25, 20, 15) mole percent, based on the total moles of the diester or diol component.

- wherein the process is a continuous process.
- wherein the process is a commercial-scale process and the average production rate of r-PET from the PET production facility is at least 227 kg (500 lbs)/hour.
- wherein the methanolysis and PET production facility are co-located.
- wherein the r-PET comprises not more than 1 (0.75, 0.50, 0.45, 0.40) mole percent of residues of diethylene glycol (DEG), based on the total diol component.
- wherein the r-PET has a carboxyl number less than 15 (10, 7, 5, 2) meq/kg.
- wherein the r-PET comprises not more than 100 ppm of residues of one or more metals selected from the group consisting of Mn, Zn, and combinations thereof.
- wherein the r-PET has an intrinsic viscosity in the range of from 0.65 to 1.10 dL/g, wherein the r-PET comprises a plurality of spheroidal particles having an intrinsic viscosity (It.V.) at the surface of each particle that is less than 0.25 dL/g higher than the It.V. at the center of the particle.
- wherein the r-PET has an acetaldehyde content of not more than 75 (50, 25, 10, 5) ppm.
- wherein the r-PET has a diester component that comprises at least 75 (80, 85, 90, 95, or 99) mole percent of residues of DMT, based on the total moles in the diester component and a diol component that comprises at least 75 (80, 85, 90, 95, or 99) mole percent of residues of EG, based on the total moles in the diol component and wherein the r-PET comprises not more than 0.5 (0.1, 0.05) mole % of residues of terephthalic acid, based on the total moles of the diester component.

**ADDITIONAL CLAIM SUPPORTING DESCRIPTION - SECOND EMBODIMENT**

In a second embodiment of the present technology there is provided a process for producing recycled content polyethylene terephthalate (r-PET), the process comprising: (a) transesterifying recycled content ethylene glycol (r-EG) and recycled content dimethyl terephthalate (r-DMT) in a transesterification zone of a PET production facility to form recycled content PET oligomers (r-PET oligomers); (b) polycondensing at least a portion of the r-PET oligomers to provide a recycled content PET polymer melt (r-PET polymer melt) having an inherent viscosity (IV) of at least 0.65 dL/g; (c) pelletizing at least a portion of the r-PET polymer melt to form recycled content PET (r-PET) particles via underwater cutting; and (d) crystallizing the r-PET particles to form crystalline r-PET particles.

The second embodiment described in the preceding paragraph can also include one or more of the additional

aspects/features listed in the following bullet pointed paragraphs. Each of the below additional features of the second embodiment can be standalone features or can be combined with one or more of the other additional features to the extent consistent. Additionally, the following bullet pointed paragraphs can be viewed as dependent claim features having levels of dependency indicated by the degree of indention in the bulleted list (i.e., a feature indented further than the feature(s) listed above it is considered dependent on the feature(s) listed above it).

- wherein the crystallizing of step (d) comprises latent heat crystallization.
- wherein the mass transfer rate during the polycondensing of step (b) is at least 1.5 number average degree of polymerization (DP) per minute.
- wherein the inherent viscosity (IV) of the r-PET polymer melt is at least 0.67 (0.70, 0.72, 0.75, 0.77, 0.80, 0.82) dL/g and/or not more than 1.05 (1.0, 0.95, 0.90, 0.85, 0.82) dL/g.
- further comprising stripping the crystalline r-PET particles to remove residual acetaldehyde (AA).
- wherein the crystalline r-PET particles are spheroidal.
- wherein the crystalline r-PET particles are not solid state polymerized.
- wherein the crystalline r-PET comprises a plurality of spheroidal particles having an intrinsic viscosity (It.V.) at the surface of the particle that is less than 0.25 dL/g higher than the It.V. at the center of the particle.
- wherein the crystalline r-PET particles have an inherent viscosity (IV) that is not more than 0.10 dL/g different than the r-PET polymer melt pelletized in step (c).
- wherein the r-PET comprises not more than 1 (0.75, 0.50, 0.45, 0.40) mole percent of residues of diethylene glycol (DEG), based on the total diol component.
- wherein the r-PET has a carboxyl number less than 15 (10, 7, 5, 2) meq/kg.
- wherein the r-PET comprises not more than 100 ppm of residues of one or more metals selected from the group consisting of Mn, Zn, and combinations thereof.
- wherein the ester exchange reaction is carried out at a temperature of at least 175, 180, 185, 190, 195, 200, 205, 210, 215, 220 and/or not more than 350, 345, 340, 335, 330, 325, or 320°C.
- wherein the ester exchange reaction is carried out at a pressure within 69 mbarg (1 psig), 138 mbarg (2 psig), 345 mbarg (5 psig), or 689 mbarg (10 psig) of atmospheric.
- wherein the ester exchange reaction is carried out at a pressure of at least 0 barg (0 psig), 345 mbarg (5 psig), 689 mbarg (10 psig), 1.7 bar (25 psig), 3.4 barg (50 psig), or 5.2 barg (75 psig) and/or not more than 6.9 barg (100 psig), 5.2 barg (75 psig), 3.4 barg (50 psig), 1.7 bar (25 psig), 1.4 barg (20 psig), 689 mbarg (10 psig), or 345 mbarg (5 psig).
- wherein the ratio of EG to DMT introduced into the ester exchange reactor is at least 1.1 (1.2:1, 1.3:1, 1.4:1, or 1.5:1) and/or not more than 5:1 (4:1, 3.5:1, or 3:1).
- wherein the conversion of DMT after the ester exchange is at least 85 (90, 95, 97, or 99) percent.
- wherein the polycondensation of step (b) is carried out at a temperature of at least 240 (245, 250, 255 or 260)°C and/or not more than 340 (335, 330, 325, 320, 315, 310, or 300)°C.
- wherein the polycondensation of step (b) is carried out at a pressure of not more than atmospheric, or less than 750, 500, 250, 100, 50, or 20 Pa.
- further comprising depolymerizing PET waste plastic in a methanolysis facility to provide recycled content ethylene glycol (r-EG) and recycled content dimethyl terephthalate (r-DMT), wherein the r-EG and/or r-DMT transesterified in step (a) includes at least a portion of the r-EG and/or r-DMT from the methanolysis facility.
    - further comprising prior to the depolymerizing, processing mixed waste plastic to provide a predominantly PET waste plastic and depolymerizing at least a portion of the predominantly PET waste plastic.
        - wherein the processing includes sizing and/or separating the mixed waste plastic.
- wherein the process is a continuous process.
- wherein the process is a commercial-scale process and the average production rate of r-PET from the PET production facility is at least 227 kg (500 pounds) per hour (lb/h).
- wherein the methanolysis and PET production facility are co-located.
- wherein the r-PET has an intrinsic viscosity in the range of from 0.65 to 1.10 dL/g, wherein the r-PET comprises a plurality of spheroidal particles having an intrinsic viscosity (It.V.) at the surface of each particle that is less than 0.25 dL/g higher than the It.V. at the center of the particle.
- wherein the r-PET has an acetaldehyde content of not more than 75 (50, 25, 10, 5) ppm.
- wherein the r-PET has a diester component that comprises at least 75 (80, 85, 90, 95, or 99) mole percent of residues of DMT, based on the total moles in the diester component and a diol component that comprises at least 75 (80, 85, 90, 95, or 99) mole percent of residues of EG, based on the total moles in the diol component and wherein the r-PET comprises not more than 0.5 (0.1, 0.05) mole % of residues of terephthalic acid, based on the total moles of the diester

component.

**Claims**

1. A process for producing a recycled content polyethylene terephthalate (r-PET), said process comprising:

(a) depolymerizing waste plastic comprising predominantly polyethylene terephthalate (PET) in a methanolysis reactor of a methanolysis facility to form at least recycled content ethylene glycol (r-EG) and recycled content dimethyl terephthalate (r-DMT);
(b) reacting r-EG and/or r-DMT in a reaction zone of a PET production facility to form a recycled content PET polymer melt (r-PET polymer melt) having an inherent viscosity (IV) of at least 0.65 dL/g, the inherent viscosity (IV) being measured as set out in the description;
(c) pelletizing at least a portion of the r-PET polymer melt to form r-PET particles; and
(d) crystallizing at least a portion of the r-PET particles to form crystalline r-PET particles, wherein the crystalline r-PET particles comprise spheroidal particles, wherein the crystalline r-PET particles are not solid-state-polymerized, and wherein the crystalline r-PET particles have an intrinsic viscosity (It.V.) at the surface of the particle that is less than 0.25 dL/g higher than the It.V. at the center of the particle, the intrinsic viscosity being measured as set out in the description;

the process further comprising withdrawing a stream comprising methanol from the reaction zone of the PET facility and introducing at least a portion of the methanol recovered from the stream into the methanolysis reactor.

2. The process of claim 1, wherein the pelletizing of step (c) comprises underwater cutting.

3. The process of claim 1, wherein the crystallizing of step (d) comprises latent heat crystallizing.

4. The process of claim 1, further comprising after the crystallizing of step (d), stripping the r-PET particles with a gas stream to remove acetaldehyde (AA) and wherein the stripped r-PET particles have an AA concentration of less than 10 ppm.

5. The process of claim 1, wherein the reacting of step (b) includes subjecting the r-EG and r-DMT to an ester exchange reaction to produce recycled content PET oligomers (r-PET oligomers) and then polymerizing at least a portion of the r-PET oligomers to form the r-PET polymer melt, wherein the mass transfer rate during the polymerizing is at least 1.5 number average degree of polymerization (DP)/minute (min).

6. The process of claim 1, wherein the r-PET comprises not more than 0.50, not more than 0.25, not more than 0.10, or not more than 0.05 mole percent of residues of terephthalic acid, based on the total moles of the diester component.

7. The process of claim 1, further comprising processing mixed plastic waste in a plastics processing facility to provide a predominantly PET waste plastic and depolymerizing the PET waste plastic in step (a), wherein said processing includes sizing and/or separating mixed waste plastic, wherein the PET waste plastic includes at least 75 (80, 85, 90, 95, or 99) weight percent of PET.

8. The process of claim 5, wherein the r-PET polymer melt has an IV in the range of from 0.70 to 0.85 dL/g and the crystalline r-PET particles have an IV that is not more than 0.10 dL/g different than the r-PET polymer melt pelletized in step (c).

9. The process of of claim 1, wherein the crystalline r-PET particles have an intrinsic viscosity (It.V.) at the surface of the particle that is less than 0.20, or less than 0.15, or less than 0.10, or less than 0.05 dL/g higher than the It.V. at the center of the particle.

10. The process of any of claims 1 to 8, wherein the crystalline r-PET particles have a diester component that comprises at least 95 mole percent of residues of dimethyl terephthalate (DMT), based on the total moles of the diester component, and a diol component that comprises at least 75 mole percent of residues of ethylene glycol (EG), based on the total moles of the diol component, and wherein the crystalline r-PET particles comprise not more than 0.5 mole percent of residues of terephthalic acid, based on the total moles of the diester component.

11. The process of any of claims 1 to 8, wherein the crystalline r-PET particles exhibit at least one of the following characteristics (i) through (v):

(i) not more than 0.1 mole % of residues of each of the following components: 4-methyl formyl benzoate, dimethyl 1,4-cyclohexanedicarboxylate, dimethyl phthalate, methyl isopropyl terephthalate, methyl propyl terephthalate, and methyl isobutyl terephthalate;
(ii) at least 0.1 mole % of residues of each of the following compounds: diisobutyl phthalate, methyl 4-ethylbenzoate, and methyl 4-vinylbenzoate;
(iii) not more than 100 ppm of cobalt (Co) and bromide (Br);
(iv) a methyl ends concentration of at least 5% and not more than 30%, based on the total end groups; and
(v) not more than 0.1 mole % of residues of 4-carboxybenzaldehyde and 9-fluoreneone-2,6-dicarboxylic acid, based on the total moles of the polyester.

12. The process of any of claims 1 to 8, wherein the process is a commercial-scale process and wherein the production rate of crystalline r-PET particles from the PET production facility is at least 226 kg per hour (500 pounds per hour).

13. The process of any of claims 1 to 8, wherein the process is a continuous process.

## Patentansprüche

1. Ein Verfahren zur Herstellung eines Polyethylenterephthalats mit Recyclinganteil (r-PET), wobei das Verfahren umfasst:

(a) Depolymerisieren von Kunststoffabfall, der überwiegend Polyethylenterephthalat (PET) umfasst, in einem Methanolyse-Reaktor einer Methanolyseanlage, um zumindest Ethylenglykol mit Recyclinganteil (r-EG) und Dimethylterephthalat mit Recyclinganteil (r-DMT) zu bilden;
(b) Umsetzen von r-EG und/oder r-DMT in einer Reaktionszone einer PET-Produktionsanlage, um eine PET-Polymerschmelze mit Recyclinganteil (r-PET-Polymerschmelze) mit einer inhärenten Viskosität (IV) von mindestens 0,65 dL/g zu bilden, wobei die inhärente Viskosität (IV) wie in der Beschreibung angegeben gemessen wird;
(c) Pelletieren von zumindest einem Teil der r-PET-Polymerschmelze, um r-PET-Partikel zu bilden; und
(d) Kristallisieren von zumindest einem Teil der r-PET-Partikel, um kristalline r-PET-Partikel zu bilden, wobei die kristallinen r-PET-Partikel sphäroidale Partikel umfassen, wobei die kristallinen r-PET-Partikel nicht festphasenpolymerisiert sind, und wobei die kristallinen r-PET-Partikel eine intrinsische Viskosität (It.V.) an der Oberfläche des Partikels aufweisen, die weniger als 0,25 dL/g höher ist als die It.V. im Zentrum des Partikels, wobei die intrinsische Viskosität wie in der Beschreibung angegeben gemessen wird;

wobei das Verfahren ferner umfasst, einen Strom, der Methanol umfasst, aus der Reaktionszone der PET-Anlage abzuziehen und zumindest einen Teil des aus dem Strom zurückgewonnenen Methanols in den Methanolyse-Reaktor einzuführen.

2. Verfahren nach Anspruch 1, wobei das Pelletieren von Schritt (c) ein Unterwassergranulieren umfasst.

3. Verfahren nach Anspruch 1, wobei das Kristallisieren von Schritt (d) eine Latentwärmekristallisation umfasst.

4. Verfahren nach Anspruch 1, ferner umfassend nach dem Kristallisieren von Schritt (d) ein Strippen der r-PET-Partikel mit einem Gasstrom zur Entfernung von Acetaldehyd (AA), und wobei die gestrippten r-PET-Partikel eine AA-Konzentration von weniger als 10 ppm aufweisen.

5. Verfahren nach Anspruch 1, wobei das Umsetzen von Schritt (b) umfasst, das r-EG und r-DMT einer Umesterungsreaktion zu unterziehen, um PET-Oligomere mit Recyclinganteil (r-PET-Oligomere) zu erzeugen, und anschließend zumindest einen Teil der r-PET-Oligomere zu polymerisieren, um die r-PET-Polymerschmelze zu bilden, wobei die Stoffübertragungsrate während der Polymerisation mindestens 1,5 zahlenmittlerer Polymerisationsgrad (DP)/Minute (min) beträgt.

6. Verfahren nach Anspruch 1, wobei das r-PET nicht mehr als 0,50, nicht mehr als 0,25, nicht mehr als 0,10 oder nicht mehr als 0,05 Molprozent an Resten von Terephthalsäure umfasst, bezogen auf die Gesamtmolzahl der Diesterkomponente.

7. Verfahren nach Anspruch 1, ferner umfassend das Verarbeiten von gemischtem Kunststoffabfall in einer Kunststoffverarbeitungsanlage, um einen überwiegend PEThaltigen Kunststoffabfall bereitzustellen, und das Depolymerisieren des PET-Kunststoffabfalls in Schritt (a), wobei die Verarbeitung ein Zerkleinern und/oder Trennen von gemischtem Kunststoffabfall umfasst, wobei der PET-Kunststoffabfall mindestens 75 (80, 85, 90, 95 oder 99) Gewichtsprozent PET umfasst.

8. Verfahren nach Anspruch 5, wobei die r-PET-Polymerschmelze eine IV im Bereich von 0,70 bis 0,85 dL/g aufweist und die kristallinen r-PET-Partikel eine IV aufweisen, die sich um nicht mehr als 0,10 dL/g von der in Schritt (c) pelletierten r-PET-Polymerschmelze unterscheidet.

9. Verfahren nach Anspruch 1, wobei die kristallinen r-PET-Partikel eine intrinsische Viskosität (It.V.) an der Oberfläche des Partikels aufweisen, die weniger als 0,20 oder weniger als 0,15 oder weniger als 0,10 oder weniger als 0,05 dL/g höher ist als die It.V. im Zentrum des Partikels.

10. Verfahren nach einem der Ansprüche 1 bis 8, wobei die kristallinen r-PET-Partikel eine Diesterkomponente aufweisen, die mindestens 95 Molprozent an Resten von Dimethylterephthalat (DMT) umfasst, bezogen auf die Gesamtmolzahl der Diesterkomponente, und eine Diolkomponente aufweisen, die mindestens 75 Molprozent an Resten von Ethylenglykol (EG) umfasst, bezogen auf die Gesamtmolzahl der Diolkomponente, und wobei die kristallinen r-PET-Partikel nicht mehr als 0,5 Molprozent an Resten von Terephthalsäure umfassen, bezogen auf die Gesamtmolzahl der Diesterkomponente.

11. Verfahren nach einem der Ansprüche 1 bis 8, wobei die kristallinen r-PET-Partikel mindestens eines der folgenden Merkmale (i) bis (v) aufweisen:

(i) nicht mehr als 0.1 Mol % an Resten von jedem der folgenden Bestandteile: 4-methyl formyl benzoate, Dimethyl-1,4-cyclohexandicarboxylat, Dimethylphthalat, Methylisopropylterephthalat, Methylpropylterephthalat und Methylisobutylterephthalat;
(ii) mindestens 0,1 Mol % an Resten von jedem der folgenden Verbindungen: Diisobutylphthalat, Methyl-4-ethylbenzoat und Methyl-4-vinylbenzoat;
(iii) nicht mehr als 100 ppm an Kobalt (Co) und Bromid (Br);
(iv) eine Methylendgruppen-Konzentration von mindestens 5% und nicht mehr als 30%, bezogen auf die gesamten Endgruppen; und
(v) nicht mehr als 0,1 Mol % an Resten von 4-Carboxybenzaldehyd und 9-fluoreneone-2,6-dicarbonsäure, bezogen auf die Gesamtmolzahl des Polyesters.

12. Verfahren nach einem der Ansprüche 1 bis 8, wobei das Verfahren ein Verfahren im kommerziellen Maßstab ist und wobei die Produktionsrate der kristallinen r-PET-Partikel aus der PET-Produktionsanlage mindestens 226 kg pro Stunde (500 pounds per hour) beträgt.

13. Verfahren nach einem der Ansprüche 1 bis 8, wobei das Verfahren ein kontinuierliches Verfahren ist.

## Revendications

1. Procédé de production de polyéthylène téréphtalate recyclé (r-PET), ledit procédé comprenant :

(a) la dépolymérisation de déchets plastiques comprenant principalement du polyéthylène téréphtalate (PET) dans un réacteur de méthanolyse d'une installation de méthanolyse pour former au moins de l'éthylène glycol recyclé (r-EG) et du téréphtalate de diméthyle recyclé (r-DMT) ;
(b) la réaction de r-EG et/ou de r-DMT dans une zone de réaction d'une installation de production de PET pour former un polymère PET fondu recyclé (polymère r-PET fondu) ayant une viscosité inhérente (IV) d'au moins 0,65 dL/g, la viscosité inhérente (IV) étant mesurée comme indiqué dans la description ;
(c) la granulation d'au moins une partie du polymère r-PET fondu pour former des particules de r-PET ; et
(d) la cristallisation d'au moins une partie des particules de r-PET pour former des particules de r-PET cristallines, dans lequel les particules de r-PET cristallines comprennent des particules sphéroïdales, dans lequel les particules de r-PET cristallines ne sont pas polymérisées à l'état solide, et dans lequel les particules de r-PET cristallines ont une viscosité intrinsèque (It.V.) à la surface de la particule qui est supérieure de moins de 0,25 dL/g à la It.V. au centre de la particule, la viscosité intrinsèque étant mesurée comme indiqué dans la description ;

le procédé comprend en outre le prélèvement d'un flux contenant du méthanol de la zone de réaction de l'installation PET et l'introduction d'au moins une partie du méthanol récupéré du flux dans le réacteur de méthanolyse.

**2.** Procédé selon la revendication 1, dans lequel la granulation de l'étape (c) comprend une découpe sous-marine.

**3.** Procédé selon la revendication 1, dans lequel la cristallisation de l'étape (d) comprend une cristallisation par chaleur latente.

**4.** Procédé selon la revendication 1, comprenant en outre, après la cristallisation de l'étape (d), le décapage des particules de r-PET avec un flux de gaz pour éliminer l'acétaldéhyde (AA) et dans lequel les particules de r-PET décapées ont une concentration d'AA inférieure à 10 ppm.

**5.** Procédé selon la revendication 1, dans lequel la réaction de l'étape (b) comprend la soumission du r-EG et du r-DMT à une réaction d'échange d'ester pour produire des oligomères de PET recyclé (oligomères r-PET) puis la polymérisation d'au moins une partie des oligomères r-PET pour former le polymère r-PET fondu, dans lequel le taux de transfert de masse pendant la polymérisation est d'au moins 1,5 degré moyen de polymérisation (DP)/minute (min).

**6.** Procédé selon la revendication 1, dans lequel le r-PET comprend au plus 0,50, au plus 0,25, au plus 0,10 ou au plus 0,05 pour cent en moles de résidus d'acide téréphtalique, sur la base du total de moles du composant diester.

**7.** Procédé selon la revendication 1, comprenant en outre le traitement de déchets plastiques mixtes dans une installation de traitement des plastiques pour fournir un déchet plastique principalement composé de PET et la dépolymérisation du déchet plastique PET à l'étape (a), dans lequel ledit traitement comporte le calibrage et/ou la séparation de déchets plastiques mixtes, dans lequel le déchet plastique PET comporte au moins 75 (80, 85, 90, 95 ou 99) pour cent en poids de PET.

**8.** Procédé selon la revendication 5, dans lequel le polymère r-PET fondu a un IV compris dans la plage de 0,70 à 0,85 dL/g et les particules de r-PET cristallines ont un IV qui n'est pas différent de plus de 0,10 dL/g de celui du polymère r-PET fondu granulé à l'étape (c).

**9.** Procédé selon la revendication 1, dans lequel les particules de r-PET cristallines ont une viscosité intrinsèque (It.V.) à la surface de la particule qui est supérieure de moins de 0,20, ou de moins de 0,15, ou de moins de 0,10, ou de moins de 0,05 dL/g à la It.V. au centre de la particule.

**10.** Procédé selon l'une quelconque des revendications 1 à 8, dans lequel les particules de r-PET cristallines ont un composant diester qui comprend au moins 95 pour cent en moles de résidus de téréphtalate de diméthyle (DMT), sur la base du total de moles du composant diester, et un composant diol qui comprend au moins 75 pour cent en moles de résidus d'éthylène glycol (EG), sur la base du total de moles du composant diol, et dans lequel les particules de r-PET cristallines ne comprennent pas plus de 0,5 pour cent en moles de résidus d'acide téréphtalique, sur la base du total de moles du composant diester.

**11.** Procédé selon l'une quelconque des revendications 1 à 8, dans lequel les particules de r-PET cristallines présentent au moins une des caractéristiques suivantes (i) à (v) :

(i) pas plus de 0,1 % en moles de résidus de chacun des composants suivants : benzoate de 4-méthylformyle, 1,4-cyclohexanedicarboxylate de diméthyle, phtalate de diméthyle, téréphtalate d'isopropyle de méthyle, téréphtalate de propyle de méthyle et téréphtalate d'isobutyle de méthyle ;
(ii) au moins 0,1 % en moles de résidus de chacun des composés suivants : phtalate de diisobutyle, 4-éthylbenzoate de méthyle et 4-vinylbenzoate de méthyle ;
(iii) pas plus de 100 ppm de cobalt (Co) et de bromure (Br) ;
(iv) une concentration en extrémités méthyle d'au moins 5 % et de pas plus de 30 %, sur la base du total de groupes terminaux ; et
(v) pas plus de 0,1 % en moles de résidus de 4-carboxybenzaldéhyde et d'acide 9-fluorèneone-2,6-dicarboxylique, sur la base du total de moles du polyester.

**12.** Procédé selon l'une quelconque des revendications 1 à 8, dans lequel le procédé est un procédé à l'échelle commerciale et dans lequel le taux de production de particules de r-PET cristallines de l'installation de production de PET est d'au moins 226 kg par heure (500 livres par heure).

**13.** Procédé selon l'une quelconque des revendications 1 à 8, dans lequel le procédé est un procédé continu.

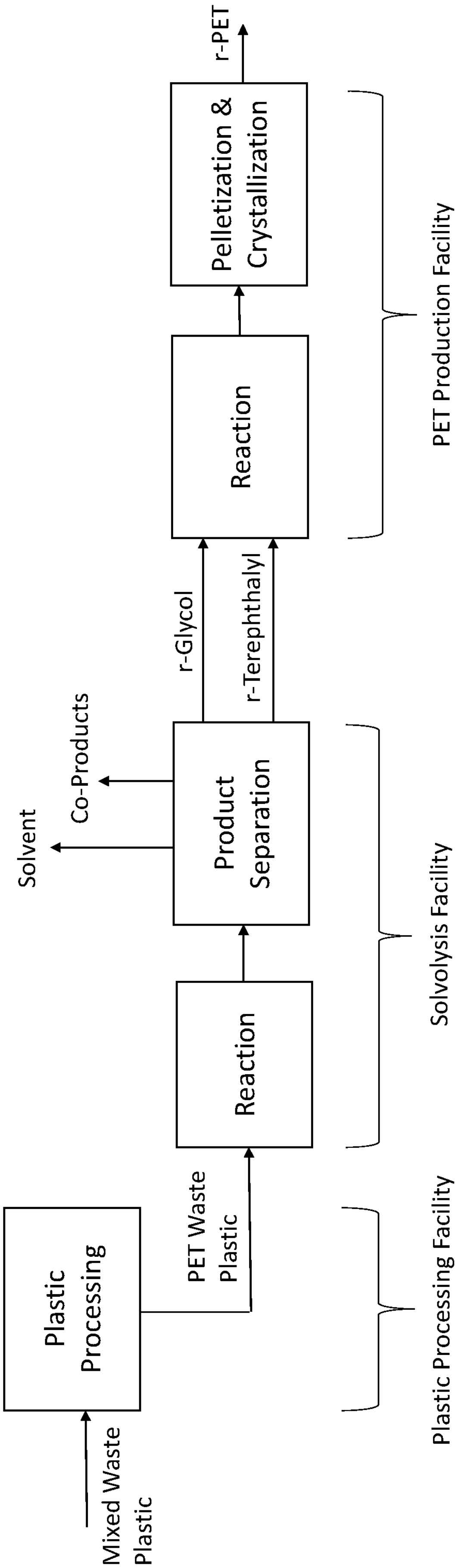
Mixed Waste Plastic
Plastic Processing
PET Waste Plastic
Reaction
Product Separation
Solvent
Co-Products
r-Glycol
r-Terephthalyl
Reaction
Pelletization & Crystallization
r-PET
Plastic Processing Facility
Solvolysis Facility
PET Production Facility

Figure 1

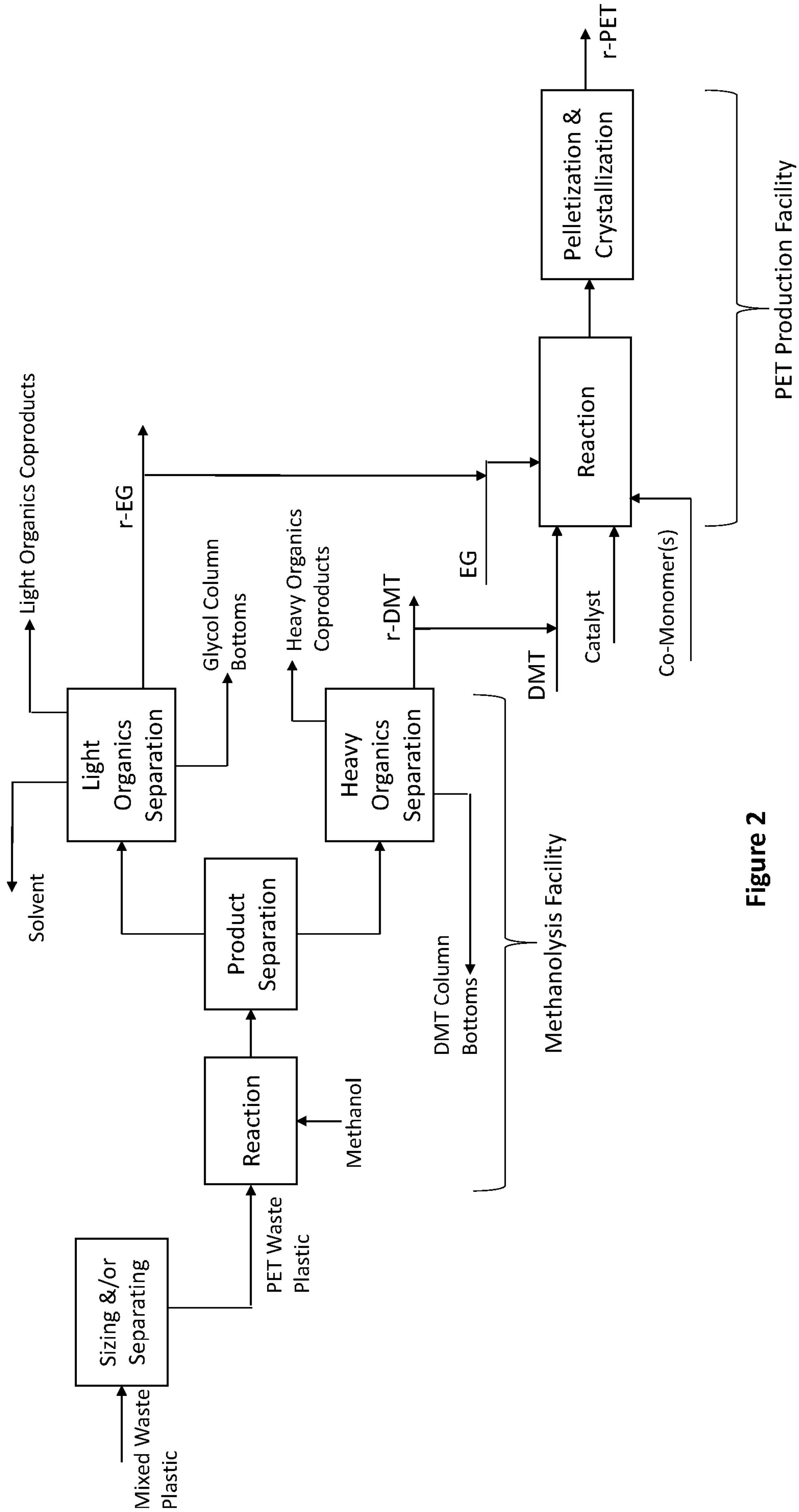
Mixed Waste Plastic
Sizing &/or Separating
PET Waste Plastic
Reaction
Methanol
Product Separation
Light Organics Separation
Solvent
Light Organics Coproducts
r-EG
Glycol Column Bottoms
Heavy Organics Separation
Heavy Organics Coproducts
r-DMT
DMT Column Bottoms
Methanolysis Facility
EG
DMT
Catalyst
Co-Monomer(s)
Reaction
Pelletization & Crystallization
r-PET
PET Production Facility

Figure 2

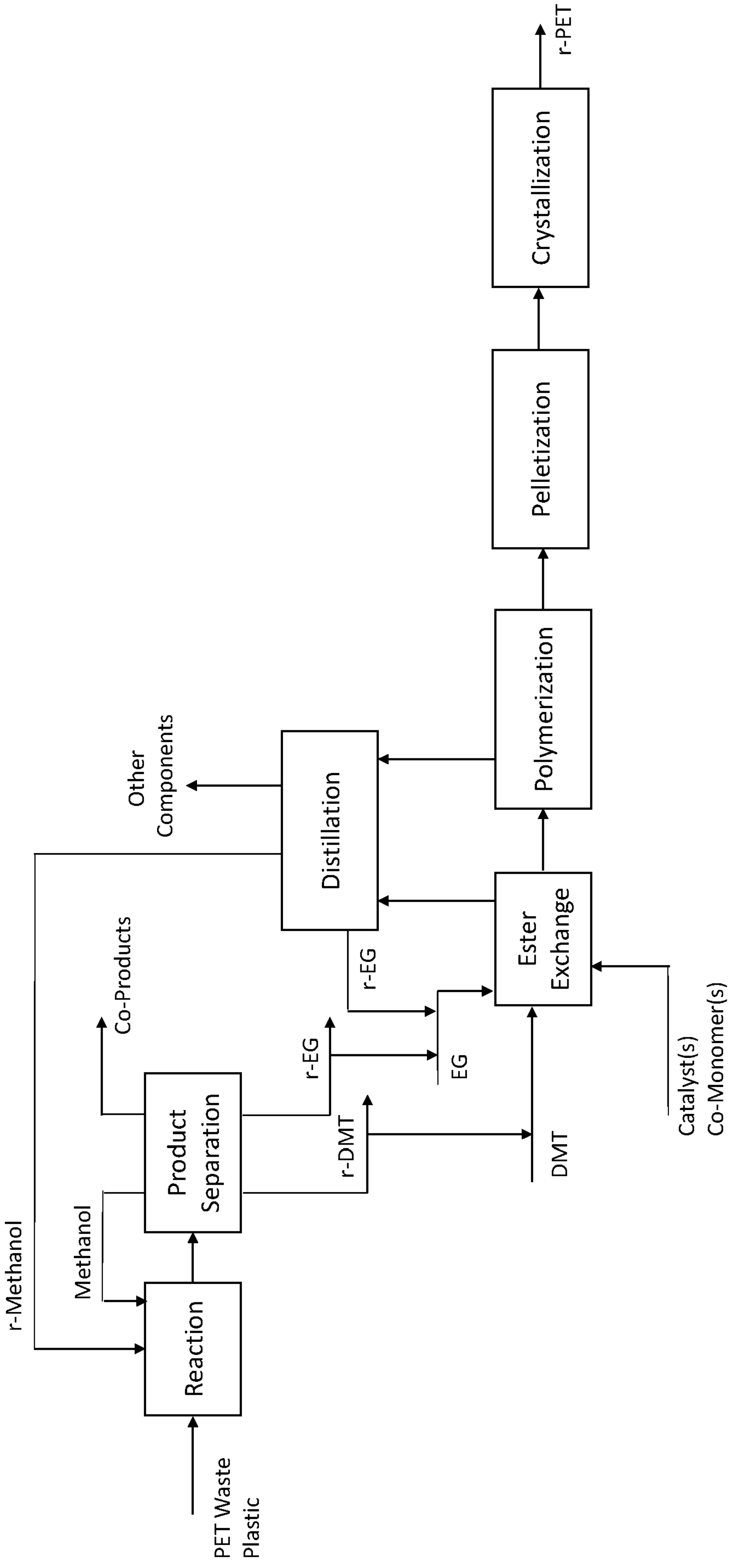
PET Waste Plastic
Reaction
r-Methanol
Methanol
Product Separation
Co-Products
r-DMT
DMT
r-EG
EG
r-EG
Distillation
Other Components
Ester Exchange
Catalyst(s) Co-Monomer(s)
Polymerization
Pelletization
Crystallization
r-PET

Figure 3

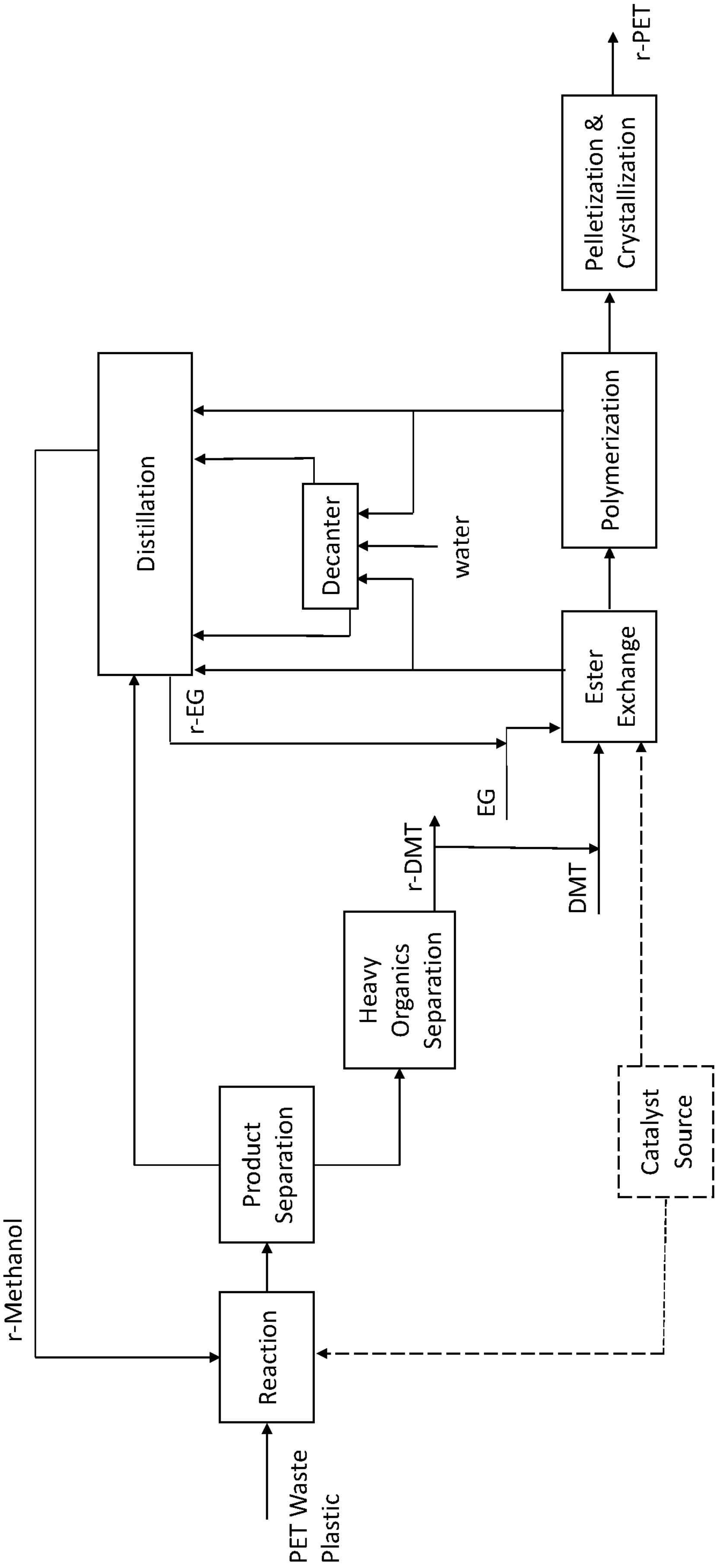
PET Waste Plastic
Reaction
r-Methanol
Product Separation
Heavy Organics Separation
Distillation
Decanter
water
r-EG
EG
r-DMT
DMT
Catalyst Source
Ester Exchange
Polymerization
Pelletization & Crystallization
r-PET

**Figure 4**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 2013041053 A1
- WO 2021211506 A1
- DE 102020203563 A1